(19)

Europäisches
Patentamt
European
Patent Office
Office européen
des brevets

(11)  **EP 4 451 580 A1**

(12)  **EUROPEAN PATENT APPLICATION**
published in accordance with Art. 153(4) EPC

(43) Date of publication:
**23.10.2024  Bulletin 2024/43**

(21) Application number: **22906479.5**

(22) Date of filing: **12.12.2022**

(51) International Patent Classification (IPC):
**H04B 17/345** (2015.01)

(52) Cooperative Patent Classification (CPC):
**H04B 17/345; H04W 24/08**

(86) International application number:
**PCT/CN2022/138316**

(87) International publication number:
**WO 2023/109734 (22.06.2023 Gazette 2023/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.12.2021  CN 202111530595**

(71) Applicant: **VIVO MOBILE COMMUNICATION CO.,
LTD.
Dongguan, Guangdong 523863 (CN)**

(72) Inventors:
• **YUAN, Pu
Dongguan, Guangdong 523863 (CN)**

• **LIU, Hao
Dongguan, Guangdong 523863 (CN)**
• **SUN, Bule
Dongguan, Guangdong 523863 (CN)**
• **JIANG, Dajie
Dongguan, Guangdong 523863 (CN)**
• **LIU, Jin
Dongguan, Guangdong 523863 (CN)**
• **SHI, Sihao
Dongguan, Guangdong 523863 (CN)**

(74) Representative: **Murgitroyd & Company
165-169 Scotland Street
Glasgow G5 8PL (GB)**

(54)  **INTERFERENCE MEASUREMENT METHOD AND APPARATUS, DEVICE, AND STORAGE MEDIUM**

(57)    This application relates to the field of communications technologies, and discloses an interference measurement method and apparatus, a device, and a storage medium. The interference measurement method of embodiments of this application includes: receiving, by a receiving side, a signal, where the signal includes a second pilot sent by an interference sending side, and the interference sending side is an interference source when the receiving side performs receiving measurement on a first pilot of a sending side; and performing, by the receiving side, interference measurement on the interference sending side, where the interference measurement includes measurement of the second pilot, and both the receiving side and the sending side use an orthogonal time frequency space OTFS system.

A receiving side receives a signal, where the signal includes a second pilot sent by an interference sending side, and the interference sending side is an interference source when the receiving side performs receiving measurement on a first pilot of a sending side — 910

The receiving side performs interference measurement on the interference sending side, where the interference measurement includes measurement of the second pilot — 920

FIG. 9

**Description**

**CROSS-REFERENCE TO RELATED APPLICATION**

This application claims priority to Chinese Patent Application No. 202111530595.8, entitled "INTERFERENCE MEASUREMENT METHOD AND APPARATUS, DEVICE, AND STORAGE MEDIUM" filed on December 14, 2021, which is incorporated herein by reference in its entirety.

**TECHNICAL FIELD**

This application relates to the field of communications technologies, and specifically, to an interference measurement method and apparatus, a device, and a storage medium.

**BACKGROUND**

A communication system defines a series of pilots with different functions to perform a series of functions such as synchronization, channel state information (Channel State Information, CSI) measurement, channel estimation, positioning, or phase tracking. These pilots are usually constructed using sequences with good auto-correlation or cross-correlation properties, and are mapped and sent on resource grids in the time-frequency domain after modulation. A transmitter selects different base sequences and mapping modes according to the different functions of the pilots, and a receiver uses different algorithms for measurement and interference management on a received signal in different domains according to the different functions of the pilots.

However, due to different interference measurement manners of different reference signals, large resource overheads are caused.

**SUMMARY**

Embodiments of this application provide an interference measurement method, to resolve a problem of excessively large resource overheads.

According to a first aspect, an interference measurement method is provided. The method includes:

receiving, by a receiving side, a signal, where the signal includes a second pilot sent by an interference sending side, and the interference sending side is an interference source when the receiving side performs receiving measurement on a first pilot of a sending side; and

performing, by the receiving side, interference measurement on the interference sending side, where the interference measurement includes measurement of the second pilot, and

both the receiving side and the sending side use an orthogonal time frequency space (Orthogonal Time Frequency Space, OTFS) system.

According to a second aspect, an interference measurement method is provided. The method includes:

sending, by a sending side, an initial signal, where the initial signal is used by the receiving side to perform receiving measurement on a first pilot of the sending side;

a signal corresponding to the receiving measurement includes the initial signal and a second pilot sent by an interference sending side, the interference sending side is an interference source of the receiving measurement, and the second pilot is used by the receiving side to perform interference measurement on the interference sending side; and

both the receiving side and the sending side use an orthogonal time frequency space OTFS system.

According to a third aspect, an interference measurement apparatus is provided. The apparatus includes:

a first receiving module, configured to receive a signal, where the signal includes a second pilot sent by an interference sending side, and the interference sending side is an interference source when the receiving side performs receiving measurement on a first pilot of a sending side; and

an interference measurement module, configured to perform interference measurement on the interference sending side, where the interference measurement includes measurement of the second pilot, and

both the receiving side and the sending side use an orthogonal time frequency space OTFS system.

According to a fourth aspect, an interference measurement apparatus is provided. The apparatus includes:

a first sending module, configured to send an initial signal, where the initial signal is used by the receiving side to perform receiving measurement on a first pilot of the sending side;
a signal corresponding to the receiving measurement includes the initial signal and a second pilot sent by an interference sending side, the interference sending side is an interference source of the receiving measurement, and the second pilot is used by the receiving side to perform interference measurement on the interference sending side; and
both the receiving side and the sending side use an orthogonal time frequency space OTFS system.

According to a fifth aspect, a receiving-side device is provided. The receiving-side device includes a processor and a memory, where a program or instructions are stored in the memory and executable on the processor, and when the program or the instructions are executed by the processor, steps of the method according to the first aspect are implemented.

According to a sixth aspect, a receiving-side device is provided, including a processor and a communication interface, where the communication interface is configured to:

receive a signal, where the signal includes a second pilot sent by an interference sending side, and the interference sending side is an interference source when the receiving side performs receiving measurement on a first pilot of a sending side; and
the processor is configured to:

perform interference measurement on the interference sending side, where the interference measurement includes measurement of the second pilot, and
both the receiving side and the sending side use an orthogonal time frequency space OTFS system.

According to a seventh aspect, a sending-side device is provided. The sending-side device includes a processor and a memory, where a program or instructions are stored in the memory and executable on the processor, and when the program or the instructions are executed by the processor, steps of the method according to the second aspect are implemented.

According to an eighth aspect, a sending-side device is provided, including a processor and a communication interface, where the communication interface is configured to:

send an initial signal, where the initial signal is used by the receiving side to perform receiving measurement on a first pilot of the sending side;
a signal corresponding to the receiving measurement includes the initial signal and a second pilot sent by an interference sending side, the interference sending side is an interference source of the receiving measurement, and the second pilot is used by the receiving side to perform interference measurement on the interference sending side; and
both the receiving side and the sending side use an orthogonal time frequency space OTFS system.

According to a ninth aspect, an interference measurement system is provided and includes: a receiving-side device and sending-side device, the receiving-side device can be configured to perform the steps of the interference measurement method according to the first aspect, and the sending-side device can be configured to perform the steps of the interference measurement method according to the second aspect.

According to a tenth aspect, a readable storage medium is provided. The readable storage medium stores a program or instructions, and when the program or the instructions are executed by a processor, steps of the method according to the first aspect are implemented or steps of the method according to the second aspect are implemented.

According to an eleventh aspect, a chip is provided. The chip includes a processor and a communication interface, the communication interface is coupled to the processor, and the processor is configured to run a program or instructions to implement the method according to the first aspect or implement the method according to the second aspect.

According to a twelfth aspect, a computer program/program product is provided. The computer program/program product is stored in a storage medium, and the computer program/program product is executed by at least one processor to implement the steps of the method according to the first aspect or the steps of the method according to the second aspect.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

**BRIEF DESCRIPTION OF THE DRAWINGS**

FIG. 1 shows a block diagram of a wireless communication system to which an embodiment of this application is applicable;

FIG. 2 is a schematic diagram of conversion between a delay-Doppler plane and a time frequency plane according to an embodiment of this application;

FIG. 3 is a schematic diagram of a relationship between channel responses under different planes according to an embodiment of this application;

FIG. 4 is a schematic flowchart of processing of transmit and receive ends of an OTFS multi-carrier system according to an embodiment of this application;

FIG. 5 is a schematic diagram of pilot mapping of a delay-Doppler domain according to an embodiment of this application;

FIG. 6 is a schematic diagram of mapping of a multi-port reference signal in a delay-Doppler domain according to an embodiment of this application;

FIG. 7 is a schematic diagram 1 of a reference signal and its mapping manner according to an embodiment of this application;

FIG. 8 is a schematic diagram 2 of a reference signal and its mapping manner according to an embodiment of this application;

FIG. 9 is a schematic flowchart 1 of an interference measurement method according to an embodiment of this application;

FIG. 10 is a schematic diagram 1 of pilot mapping of a delay-Doppler domain resource grid according to an embodiment of this application;

FIG. 11 is a schematic diagram 2 of pilot mapping of a delay-Doppler domain resource grid according to an embodiment of this application;

FIG. 12 is a schematic diagram 1 of a measurement area of a delay-Doppler domain resource grid according to an embodiment of this application;

FIG. 13 is a schematic diagram 2 of a measurement area of a delay-Doppler domain resource grid according to an embodiment of this application;

FIG. 14 is a schematic diagram 3 of pilot mapping of a delay-Doppler domain resource grid according to an embodiment of this application;

FIG. 15 is a schematic diagram 3 of a measurement area of a delay-Doppler domain resource grid according to an embodiment of this application;

FIG. 16 is a schematic flowchart 2 of an interference measurement method according to an embodiment of this application;

FIG. 17 is a schematic structural diagram 1 of an interference measurement apparatus according to an embodiment of this application;

FIG. 18 is a schematic structural diagram 2 of an interference measurement apparatus according to an embodiment of this application;

FIG. 19 is a schematic structural diagram of a communication device according to an embodiment of this application;

FIG. 20 is a schematic diagram of a hardware structure of a receiving-side device according to an embodiment of this application; and

FIG. 21 is a schematic diagram of a hardware structure of a sending-side device according to an embodiment of this application.

**DETAILED DESCRIPTION**

The following clearly describes the technical solutions in the embodiments of this application with reference to the accompanying drawings in the embodiments of this application. Apparently, the described embodiments are merely some but not all of the embodiments of this application. All other embodiments obtained by a person of ordinary skill in the art based on the embodiments of this application fall within the protection scope of this application.

The specification and claims of this application, and terms "first" and "second" are used to distinguish similar objects, but are not used to describe a specific sequence or order. It should be understood that, the terms used in this way is exchangeable in a proper case, so that the embodiments of this application can be implemented in another order different from those shown or described herein. In addition, objects distinguished by "first" and "second" are generally of one type, and the quantity of objects is not limited. For example, there may be one or more first objects. In addition, "and/or" in this specification and the claims represents at least one of the connected objects. The character "/" usually indicates an "or" relationship between associated objects.

It is worth pointing out that, the technologies described in the embodiments of this application are not limited to the Long Term Evolution (Long Term Evolution, LTE) /LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-Carrier Frequency Division Multiple Access (Single-Carrier Frequency Division Multiple Access, SC-FDMA), and other systems. The terms "system" and "network" may be used interchangeably in the embodiments of this application. The described technologies can be applied to the systems and radio technologies mentioned above, and can also be applied to other systems and radio technologies. The new radio (New Radio, NR) system is described in the following descriptions for the purpose of exemplification, and the NR terms are used in most of the following descriptions, but the technologies may also be applied to applications other than NR system applications, such as the 6th Generation (6th Generation, 6G) communication system.

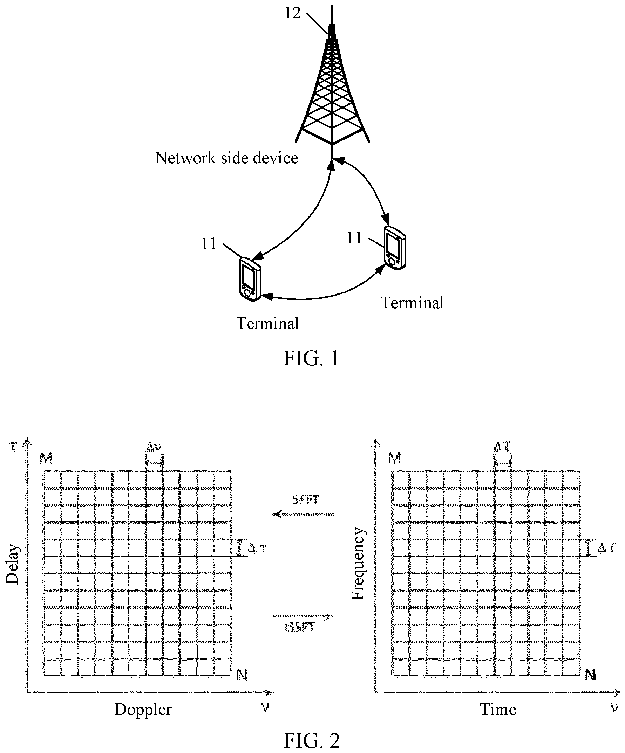

FIG. 1 shows a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicle UE (VUE), a pedestrian UE (PUE), a smart home appliance (a home device having a wireless communication function, for example, a refrigerator, a television, a washing machine, or furniture), a game console, a personal computer (personal computer, PC), a teller machine, or a self-service machine. The wearable device includes: a smart watch, a smart band, a smart headset, smart glasses, a smart jewelry (a smart bangle, a smart bracelet, a smart ring, a smart necklace, a smart anklet bracelet, a smart anklet chain, or the like), a smart wristband, a smart costume, or the like. It should be noted that the specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network unit. The access network device may include a base station, a WLAN access point, a Wi-Fi node, or the like. The base station may be referred to as a nodeB, an evolved nodeB (eNB), an access point, a base transceiver station (Base Transceiver Station, BTS), a radio base station, a radio transceiver, a basic service set (Basic Service Set, BSS), an extended service set (Extended Service Set, ESS), a home nodeB, a home evolved nodeB, a transmitting receiving point (Transmitting Receiving Point, TRP), or another proper term in the field. As long as a same technical effect is achieved, the base station is not limited to a specific technical term. It should be noted that only a base station in an NR system is used as an example in the embodiments of this application for description, but a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that only a core network device in an NR system is used as an example in the embodiments of this application for description, but a specific type of the core network device is not limited.

The following content is described first:

In a complex electromagnetic wave transmission environment in a city, due to existence of a large number of scattering, reflection, and refraction surfaces, radio signals arrive at a receiving antenna through different paths at different moments, that is, a multipath effect of transmission. When preceding and following symbols of a sent signal arrive simultaneously through different paths, or in other words, when the following symbol arrives within delay spread of the preceding symbol, inter-symbol interference (inter symbol interference, ISI) occurs. Similarly, in a frequency domain, due to a Doppler effect caused by a relative speed between transmit and receive ends, subcarriers where the signal is located have different degrees of frequency offset, to cause subcarriers that may have been orthogonal to overlap, that is, inter-carrier interference (inter carrier interference, ICI). The orthogonal frequency division multiplexing (Orthogonal frequency division multiplexing, OFDM) multi-carrier system used in the existing protocol has better anti-ISI performance through design of adding a cyclic prefix (cyclic prefix, CP). However, the weakness of OFDM is that the subcarrier spacing is limited. Therefore, in scenarios of dealing with high-speed movement (for example, high-speed rail), because the large Doppler frequency offset caused by the high relative speed between the transmit and receive ends destroys the orthogonality between OFDM subcarriers, severe ICI is caused between the subcarriers.

Proposal of an OTFS technology is dedicated to solving the problems in the above OFDM system. The OTFS technology defines transformation between the delay-Doppler domain and the time-frequency domain. By mapping service data and pilots to the delay-Doppler domain simultaneously for processing at the transmit and receive ends, by designing pilots in the delay-Doppler domain to capture delay and Doppler characteristics of a channel, and by designing a guard interval, a pilot pollution problem caused by ICI in the OFDM system is avoided, thereby making channel estimation more accurate and helping the receiver improve the success rate of data decoding.

The OTFS technology assumes that the channel is constant within a frame whose sampling point length is MN. By introducing a spreading sequence, spread data is superimposed and sent on the same resource; or through a specially designed spreading sequence, spread data is staggered and sent. The space diversity characteristic can be enhanced through the spreading sequence. In addition, in a multi-user scenario, the spreading sequence can also be used to achieve multi-user diversity, which avoids the disadvantage of large multi-user processing delay caused because demodulation needs to be performed in an entire frame in the conventional OTFS technology.

1. OTFS communication technology

The delay and Doppler characteristics of the channel are essentially determined by the multipath channel. Signals arriving at the receiver through different paths have different arrival times due to a difference between spread distances. For example, two echoes $s_1$ and $s_2$ arrive at the receiver through distances $d_1$ and $d_2$ respectively, and then arrive at the receiver with a time difference of $\Delta t = \frac{|d_1 - d_2|}{c}$, where c is the speed of light. Due to this time difference between the echoes $s_1$ and $s_2$, their incoherent superposition on the receiver side causes jitter in the observed signal amplitude, that is, a fading effect. Similarly, Doppler spreading of a multipath channel is also caused by a multipath effect.

The Doppler effect is caused due to the relative speed between the transmit and receive ends, and signals arriving at the receiver through different paths have different angles of incidence relative to the normal of the antenna. Therefore, the difference in relative speed is caused, and then different Doppler frequency offsets of signals on different paths are caused. It is assumed that the original frequency of the signal is $f_0$, the relative speed between the transmit and receive ends is $\Delta v$, and the incident angle between the signal and the normal of the antenna of the receive end is $\theta$. Then, $\Delta f = \frac{\Delta v}{f} \cos \theta$. Obviously, when the two echoes $s_1$ and $s_2$ arrive at the antenna of the receive end through different paths and have different incident angles $\theta_1$ and $\theta_2$, the obtained Doppler frequency offsets $\Delta f_1$ and $\Delta f_2$ are also different.

To sum up, the signal seen by the receiver is the superposition of component signals with different delay and Doppler from different paths, and the whole is reflected as a received signal with fading and frequency offset relative to the original signal. Delay-Doppler analysis of the channel helps collect delay-Doppler information of each path, to reflect the delay-Doppler response of the channel.

The full name of OTFS modulation technology is Orthogonal Time Frequency Space (Orthogonal Time Frequency Space) modulation. This technology logically maps information in a data packet with a size of $M \times N$, such as a Quadrature Amplitude Modulation (Quadrature Amplitude Modulation, QAM) symbol, to an $M \times N$ grid point on a two-dimensional delay-Doppler plane, that is, a pulse in each grid point modulates a QAM symbol in the data packet.

Further, by designing a set of orthogonal two-dimensional basis functions, a data set on the $M \times N$ delay-Doppler domain plane can be transformed onto an $N \times M$ time-frequency domain plane, and this transformation is called Inverse Symplectic Finite Fourier Transform (Inverse Symplectic Finite Fourier Transform, ISFFT) in mathematics.

Correspondingly, the transformation from the time-frequency domain to the delay-Doppler domain is called Symplectic Finite Fourier Transform (Symplectic Finite Fourier Transform, SFFT). The physical meaning behind it is that the delay and Doppler effect of the signal is actually a linear superposition effect of a series of echoes with different time and frequency offsets after the signal passes through a multipath channel. To be specific, the delay-Doppler analysis and the time-frequency domain analysis can be obtained through mutual conversion between ISFFT and SFFT.

FIG. 2 is a schematic diagram of conversion between a delay-Doppler plane and a time frequency plane according to an embodiment of this application; As shown in FIG. 2, the OTFS technology can convert a time-variant multipath channel into a time-invariant (in specific duration) two-dimensional delay-Doppler domain channel, thereby directly reflecting channel delay-Doppler response characteristics caused by geometric characteristics of relative positions of reflectors between transceivers in a radio link. This has three advantages as follows:

(a) Invariance of channel coupling states. Since the delay and Doppler of the signal reflect that the direct effect of the reflectors in the physical channel depends on only the relative speeds and positions of the reflectors, the delay and Doppler response of the signal can be regarded as constant on the time scale of the radio frame.

(b) Separability of channel coupling states. In the channel frequency response in the delay-Doppler domain, all diversity paths are each represented as a single impulse response, fully separable. A QAM symbol traverses all the diversity paths.

(c) Orthogonality between channel coupling states. Since the channel impulse response in the delay-Doppler domain is limited to a resource element in the delay-Doppler domain, there is theoretically no inter-delay/Doppler interference (inter delay/Doppler interference, IDIs) in the delay dimension and the Doppler dimension at the receive end.

Due to the above characteristics, the delay-Doppler domain analysis eliminates the difficulty of tracking the time-variant fading characteristics of the conventional time-frequency domain analysis, and instead analyzes the time-invariant delay-Doppler channel to extract all the diversity characteristics of the time-frequency domain channel and then calculate the time-frequency domain channel through the conversion relationship between the delay-Doppler domain and the time-frequency domain. In the actual system, the quantity of delay paths and Doppler frequency offsets of the channel is much less than the quantity of time domain and frequency domain responses of the channel, and the channel represented by the delay-Doppler domain is relatively simple. Therefore, using the OTFS technology to perform analysis in the delay-Doppler domain can make the packaging of reference signals more compact and flexible, especially conducive to supporting a large-scale antenna array in a massive MIMO system.

The core of OTFS modulation is that the QAM symbol defined on the delay-Doppler plane is transformed into the time-frequency domain for sending and then the receive end returns to the delay-Doppler domain for processing. Therefore, a radio channel response analysis method in the delay-Doppler domain can be introduced.

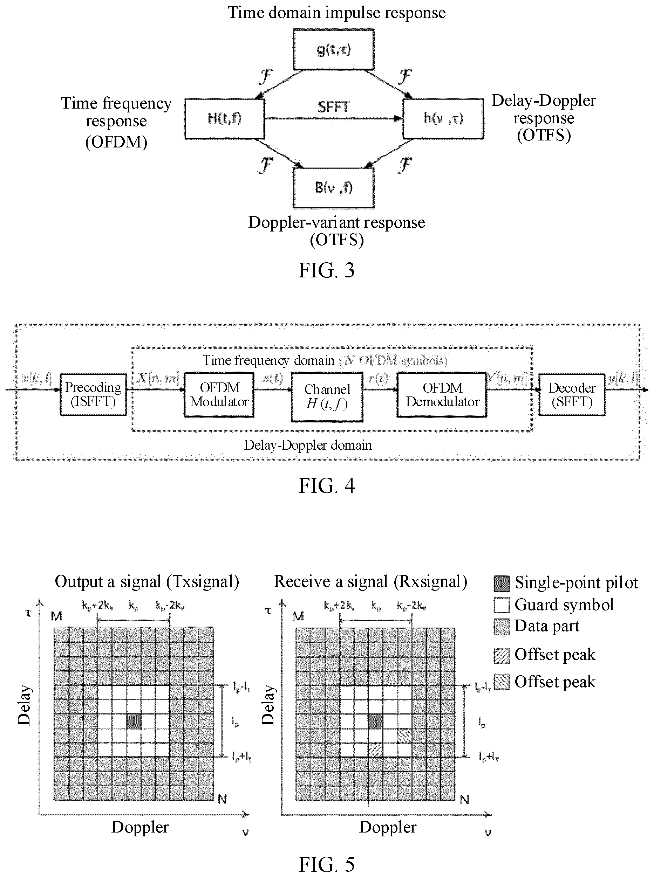

FIG. 3 is a schematic diagram of a relationship between channel responses under different planes according to an embodiment of this application. As shown in FIG. 3, it reflects a relationship between expressions of channel responses under different planes when a signal passes through a linear time-variant radio channel.

In FIG. 3, an SFFT transformation formula is:

$$h(\tau, v) = \iint H(t, f) e^{-j2\pi(vt - f\tau)} d\tau dv \qquad (1)$$

Correspondingly, an ISFFT transformation formula is:

$$H(t, f) = \iint h(\tau, v) e^{j2\pi(vt - f\tau)} d\tau dv \qquad (2)$$

When the signal passes through a linear time-variant channel, let the received signal in the time domain be $r(t)$ and the corresponding received signal in the frequency domain be $R(f)$, and $r(t) = F^{-1}\{R(f)\}$. $r(t)$ can be expressed in the following form:

$$r(t) = s(t) * h(t) = \int g(t, \tau) s(t - \tau) d\tau \qquad (3)$$

It can be seen from the relationship in FIG. 3 that

$$g(t, \tau) = \int h(v, \tau) e^{j2\pi vt} dv \qquad (4)$$

(4) is substituted into (3) to get:

$$r(t) = \iint h(v, \tau) s(t - \tau) e^{j2\pi vt} d\tau dv \qquad (5)$$

From the relationship shown in FIG. 3, the classical Fourier transform theory, and formula (5), it can be seen that

$$
\begin{aligned}
r(t) &= \iint h(v,\tau)\left(\int S(f)e^{j2\pi f(t-\tau)}df\right)e^{j2\pi vt}d\tau dv \\
&= \int\left(\iint h(v,\tau)e^{j2\pi(vt-f\tau)}d\tau dv\right)S(f)e^{j2\pi ft}df \\
&= \int H(t,f)S(f)e^{j2\pi ft}df \\
&= \mathrm{F}^{-1}\{R(f)\}
\end{aligned}
\tag{6}
$$

Based on Equation (6), it can be seen that the delay-Doppler domain can be analyzed in the OTFS system by relying on a communication framework established in the time-frequency domain and adding additional signal processing at the transmit and receive ends. In addition, the additional signal processing is only composed of Fourier transform, which can be completely implemented by existing hardware without adding new modules.

In an actual system, the OTFS technology can be implemented as a pre-processing module and a post-processing module of a filtered Orthogonal frequency division multiplexing (Orthogonal frequency division multiplexing, OFDM) system, and therefore is well compatible with a multi-carrier system under an existing communication technology architecture such as an NR technology architecture.

When OTFS is combined with a multi-carrier system, the implementation of the transmit end is as follows: A QAM symbol containing information to be sent is carried by a waveform of a delay-Doppler plane, undergoes two-dimensional Inverse Symplectic Finite Fourier Transform (Inverse Symplectic Finite Fourier Transform, ISFFT), is converted to a waveform of a time-frequency domain plane in the conventional multi-carrier system, then undergoes symbol-level one-dimensional Inverse Fast Fourier Transform (Inverse Fast Fourier Transform, IFFT) and serial-to-parallel conversion, and becomes a time-domain sampling point to be sent out.

FIG. 4 is a schematic flowchart of processing of transmit and receive ends of an OTFS multi-carrier system according to an embodiment of this application. As shown in FIG. 4, the receive end of the OTFS system is substantially an inverse process of the transmit end: After being received by a receiver, a time domain sampling point is first transformed to a waveform on a time-frequency domain plane through parallel transmission conversion and symbol-level one-dimensional Fast Fourier Transform (Fast Fourier Transform, FFT), and then converted to a waveform on a delay-Doppler domain plane through two-dimensional symplectic finite Fourier transform SFFT, and then processing is performed by the receiver on a QAM symbol carried by the waveform in the delay-Doppler domain: including channel estimation and equalization, demodulation, decoding, and the like.

An advantage of OTFS modulation is mainly reflected in the following aspects:

(a) OTFS modulation transforms a time-variant fading channel in the time-frequency domain between transceivers into a deterministic non-fading channel in the delay-Doppler domain. In the delay-Doppler domain, each symbol in a set of information symbols sent at a time experiences the same static channel response and SNR.

(b) The OTFS system parses reflectors in the physical channel through a delay-Doppler image, and uses a receiving equalizer to coherently combine energy from different reflection paths, which actually provides a static channel response without fading. Utilizing the above-mentioned static channel characteristics, the OTFS system does not need to introduce closed-loop channel adaptation to deal with fast-changing channels like the OFDM system, thereby improving system robustness and reducing the complexity of system design.

Since the number of delay-Doppler states in the delay-Doppler domain is much less than the number of time-frequency states in the time-frequency domain, a channel in the OTFS system can be expressed in a very compact form. The channel estimation of the OTFS system has fewer overheads and is more accurate.

Another advantage of OTFS is reflected in dealing with an extreme Doppler channel. By analyzing the delay-Doppler image under appropriate signal processing parameters, the Doppler characteristics of the channel can be fully presented, which is beneficial to signal analysis and processing in Doppler-sensitive scenarios (for example, high-speed movement and millimeter waves).

Therefore, the channel estimation in the OTFS system can adopt a brand-new method. The transmitter maps a pilot pulse to the delay-Doppler domain, and the receiver uses the analysis of the delay-Doppler image of the pilot to estimate a channel response $h(v, \tau)$ in the delay-Doppler domain. Then, according to the relationship in FIG. 3, the channel response expression in the time-frequency domain can be obtained, which is convenient for signal analysis and processing.

FIG. 5 is a schematic diagram of pilot mapping of a delay-Doppler domain according to an embodiment of this application; FIG. 5 shows a manner that can be adopted for pilot mapping in the delay-Doppler domain. In FIG. 5, a sent signal includes a single-point pilot (a small square labeled 1) located at $(l_p,k_p)$, guard symbols (a shadeless part) having

an area of $(2l_\tau+1)(4k_v+1)$ -1 and surrounding the small square, and a data part (region other than the guard symbols) of $MN-(2l_\tau+1)(4k_v+1)$. At the receive end, there are two offset peaks (shaded parts with oblique lines) in a guard band of a delay-Doppler domain grid point, which means that a channel has two secondary paths with different delay-Doppler in addition to a main path. By measuring amplitude, delay, and Doppler parameters of all the secondary paths, a delay-Doppler domain expression of the channel is obtained, that is, $h(v, \tau)$.

In particular, in order to prevent data on a grid point of a received signal from polluting a pilot symbol, resulting in inaccurate channel estimation, the area of the guard symbols should satisfy the following condition:

$$l_\tau \geq \tau_{max} M \Delta f, k_v \geq v_{max} N \Delta T \qquad (7)$$

$\tau_{max}$ and $v_{max}$ are the maximum time delay and the maximum Doppler frequency offset of all paths of the channel respectively.

The example in FIG. 5 corresponds to a single-port scenario, that is, only one set of reference signals needs to be sent. In a modern multi-antenna system, a plurality of antenna ports can be used to send multi-stream data simultaneously, to make full use of the degree of spatial freedom of the antennas and obtain the space diversity gain or improve the system throughput.

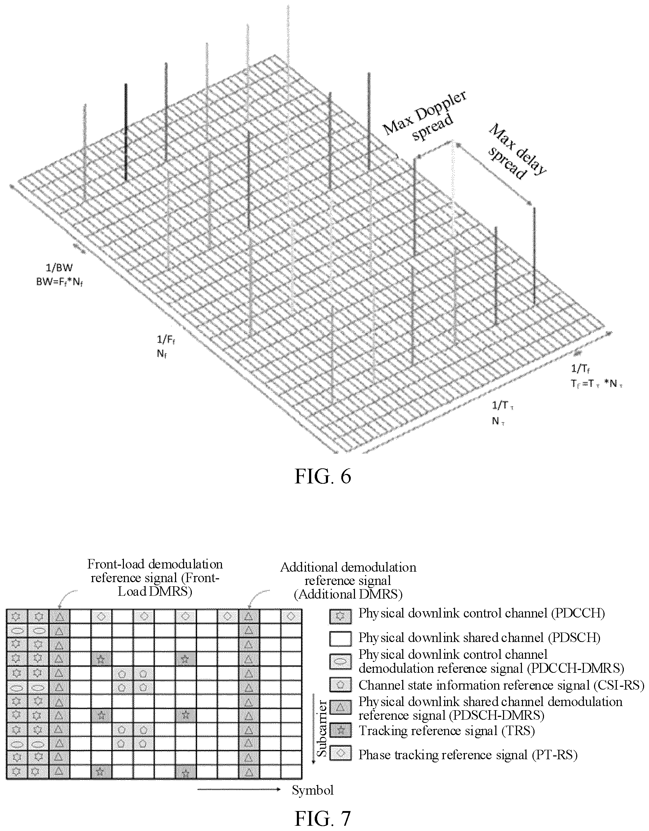

FIG. 6 is a schematic diagram of mapping of a multi-port reference signal in a delay-Doppler domain according to an embodiment of this application. When a plurality of antenna ports exists, a plurality of pilots needs to be mapped to a delay-Doppler plane. Therefore, a pilot mapping manner shown in FIG. 6 is generated.

In FIG. 6, 24 antenna ports correspond to 24 pilot signals. Each pilot signal adopts the form shown in FIG. 5, that is, the pattern of a central point impulse signal plus guard symbols on both sides. The number of delay-Doppler domain resource elements (Resource Elements, RE) occupied by a single pilot is $(2l_\tau + 1)(4k_v + 1)$. If there are $P$ antenna ports, considering that guard bands of adjacent antenna ports can be reused and assuming that the pilot placement adopts $P_1$ in the delay dimension and $P_2$ in the Doppler dimension and $P = P_1 P_2$ is satisfied, the total resource overheads of the pilots are $[P_1(l_\tau+1)+l_\tau][P_2(2k_v+1)+2k_v]$.

FIG. 7 is a schematic diagram 1 of a reference signal and its mapping manner according to an embodiment of this application. As shown in FIG. 7, PDCCH/PDSCH-DMRS are used to demodulate messages of control/data parts respectively. The receiving side first transforms a received sampling point into the TF domain, then performs channel estimation in the TF domain through the known DMRS, and uses a channel estimation result to perform equalization. Because overheads of the DMRS and available resources of data need to be traded off, it is necessary to use the limited DMRS to estimate the TF domain channel in the entire time slot, which inevitably leads to sparse mapping and interpolation operations. Based on this, the DMRS in the radio frame is embodied as sparse mapping of the time domain and the frequency domain, and covers the entire bandwidth as much as possible to reduce the impact of frequency selective fading.

A channel state information reference signal (Channel State Information Reference Signal, CSI-RS) is mainly used to measure CSI of a channel and perform beam management. The receiving side can obtain some key parameters of the physical layer such as delay, Doppler, and reference signal received power (Reference Signal Received Power, RSRP) through direct measurement, and then performs calculation according to an algorithm specified by a protocol to obtain and report measurement quantities defined by the protocol, such as a channel quality indicator (Channel quality indicator, CQI), a precoding matrix indicator (Precoding matrix indicator, PMI), a rank indicator (Rank indicator, RI), a CSI-RS resource indicator (CSI-RS Resource Indicator, CRI), and a layer indicator (Layer Indicator, LI). The CSI-RS is divided into NZP (non-zero-power)-CSI-RS and ZP (zero-power)-CSI-RP. The former is a CSI-RS signal generated based on a Gold sequence, and the latter can be considered as a zero-power CSI-RS "signal" sent on a CSI-RS port specified by the protocol. Using these two signals, CSI-RS-based measurement can be divided into two types of measurement, where one is called channel measurement (channel measurement, CM), and the other is called IM (interference measurement), namely, interference measurement. The CM measurement mainly measures the above-mentioned various measurement quantities, and needs to use non-zero power (Non-Zero Power, NZP) CSI-RS/zero power (Zero Power, ZP) CSI-RS; and the interference measurement (Interference Measurement, IM) mainly measures inter-cell signal interference, and needs to use only a ZP-CSI-RS for measurement.

A phase tracking reference signal (Phase Tracking Reference Signal, PT-RS) is used to measure a phase noise superimposed by impact of non-ideality of hardware when a signal is sent and received, which is reflected as phase rotation of a received constellation diagram relative to a transmitted constellation diagram. In the OFDM system, since the phase noise generated by the hardware has the characteristics of high inter-subcarrier correlation and low inter-symbol correlation, the PT-RS defined by the communication system also correspondingly features sparse frequency domain mapping and dense time-domain mapping, as shown in FIG. 7.

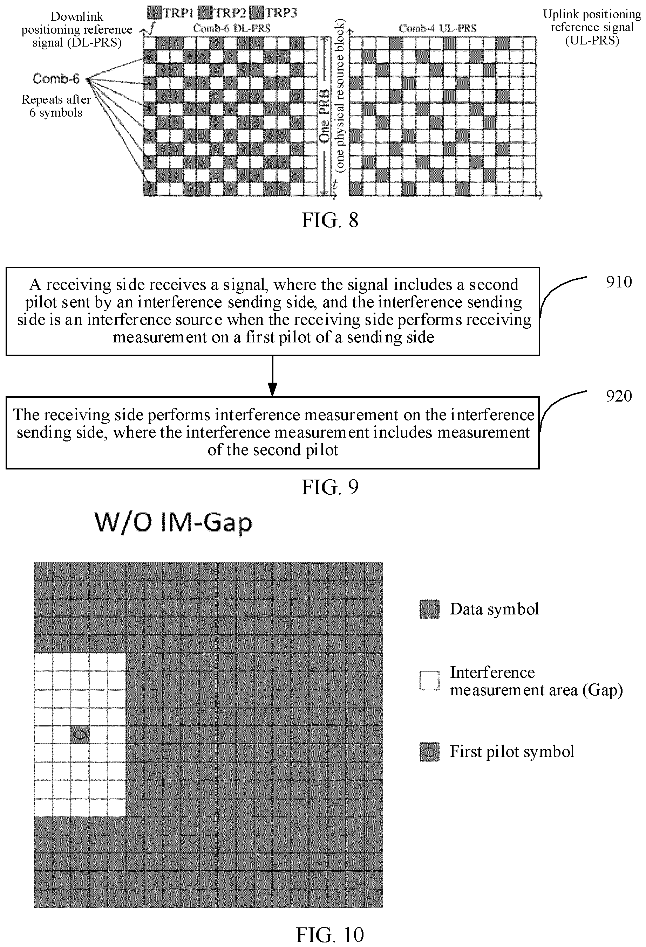

FIG. 8 is a schematic diagram 2 of a reference signal and its mapping manner according to an embodiment of this application. There is also a special type of reference signal called a positioning reference signal, that is, P (position-

**EP 4 451 580 A1**

ing)-RS, which exists as an optional feature of NR. The mapping of the P-RS is shown in FIG. 8. Using the P-RS for performing positioning measurement depends on the following key measurement quantities: 1) RSRP, where using an attenuation degree of an electromagnetic wave reflected by the RSRP, and according to a mapping relationship of a channel model, a distance of the receiving side relative to the sending side; and 2) angle of departure (angle of departure, AoD) of a received signal, which is used to estimate an orientation of the receiving side relative to the sending side. Based on a requirement of estimating the AoD, the sending side needs to frequently adjust a sending beam to obtain fine angular resolution, so that the P-RS is mapped on each OFDM symbol. In addition, the measurement accuracy of the RSRP is related to the number of RS sample points, so that a comb-4/6 sparse mapping method is used in the frequency domain to balance overheads, a measurement effect, and multi-user resource multiplexing requirements.

Definitions of mapping rules and measurement methods of various pilots well meet needs of signal processing on the receiving side, but have disadvantages as follows: There are many types of reference signals, and it is necessary to design one set of individual configuration and indication procedures for each type of reference signal, making protocol design very complicated; and different mapping modes are defined for reference signals with different functions, which does not consider multiplexing of the reference signals, resulting in large resource overheads, where due to non-uniform reference signal design, a frame structure needs to be adjusted frequently as needed, and signaling indication overheads are also large.

To overcome the above defects, the embodiments of this application provide an interference measurement method and apparatus, and a device. The interference measurement method and apparatus, and the device provided in the embodiments of this application is described in detail below with reference to the accompanying drawings by using some embodiments and application scenarios thereof.

FIG. 9 is a schematic flowchart 1 of an interference measurement method according to an embodiment of this application. As shown in FIG. 9, the interference measurement method includes the following step 910 and step 920:

Step 910: A receiving side receives a signal, where the signal includes a second pilot sent by an interference sending side, and the interference sending side is an interference source when the receiving side performs receiving measurement on a first pilot of a sending side.
Step 920: The receiving side performs interference measurement on the interference sending side, where the interference measurement includes measurement of the second pilot, and
both the receiving side and the sending side use an orthogonal time frequency space OTFS system.

Specifically, to overcome the defect of large measurement overheads caused by many types of reference signals in the conventional technology, this embodiment of this application can realize the transmission of the first pilot based on the OTFS system; and under the framework of the single-point pulse or sequence pilot in the delay-Doppler domain, the interference measurement and control method based on the OTFS system is realized. Therefore, excessive definition and cumbersome interpretation of the reference signal in the communication system can be avoided, and pilot overheads and signaling overheads can be saved.

Specifically, in this embodiment of this application, pilot mapping in a delay-Doppler (Delay-Doppler, DD) domain may be used for interference management. If the received interference of the signal on the receiving side is regarded as a part of the equivalent channel, the estimation and elimination of the interference is essentially a part of the generalized channel estimation and equalization. Therefore, in the domain where the channel estimation and equalization is implemented, the interference management can also be implemented. Therefore, the interference measurement performed in the TF domain in the OFDM system can be migrated to the DD domain in the OTFS system.

In the communication system, this embodiment of this application can use an IM-CSI-RS (a specially configured ZP-CSI-RS) for interference management. Since the modulation symbols of the OFDM system are multiplexed in the time-frequency domain, the interference power measurement (namely, interference measurement) can be performed through the blank resource in a specific position in the time slot (namely, reserved IM-CSI-RS position), and the magnitude of the interference on a specific time-frequency resource can be roughly measured, to complete the interference measurement.

Optionally, the sending side and the receiving side are a pair of communication nodes performing wireless communication.

Optionally, the interference sending side is an interference source when the receiving side performs measurement.

For example, the receiving side may be UE, and the sending side may be a base station of a current cell where the UE is located; and the interference sending side may be a base station of a neighboring cell.

Optionally, the sending side may first send an initial signal to the receiving side, but when the initial signal is received and measured on the receiving side, interference caused when the second pilot is sent by the interference sending side is further received and measured. To be specific, the receiving side may receive a signal, and the received signal includes the second pilot sent by the interference sending side and the initial signal, so that the receiving side

10

can measure the second pilot in the measurement position, that is, realize the interference measurement on the interference sending side.

Further, in this embodiment of this application, by configuring IM-CSI-RS in different resource positions, the statistical characteristics of the interference distribution in the resource occupied by the subframe can be obtained, and then used for the receiver algorithm to perform interference cancellation, or used for information reporting to perform interference control.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, in a case that the interference sending side uses the OTFS system, the performing, by the receiving side, interference measurement on the interference sending side includes:

performing, by the receiving side, interference measurement on the interference sending side in a delay-Doppler domain.

Specifically, in a case that the interference sending side uses the OTFS system, the receiving side, the sending side, and the interference sending side all use the OTFS system.

Specifically, since modulation symbols for interference management between OTFS systems are all mapped in the DD domain, the orthogonality of resource allocation is also reflected in the DD domain. Therefore, the measurement and management of interference can be performed entirely in the DD domain.

Specifically, for the OTFS system, because the interference on the partial delay-Doppler domain resource element (delay-Doppler domain Resource element, D-RE) resource on the DD domain undergoes ISFFT and then is reflected in the TF domain as interference distributed on all REs in the time slot, interference measurement in the TF domain inevitably needs to traverse the entire time-frequency resource grid. However, in the DD domain, it is necessary to measure only D-RE resources of interest.

Therefore, in this embodiment of this application, in a case that the receiving side, the sending side, and the interference sending side all use the OTFS system, the receiving side may perform interference measurement on the interference sending side in the delay-Doppler domain.

Optionally, the performing, by the receiving side, interference measurement on the interference sending side in a delay-Doppler domain includes:

determining, by the receiving side, target configuration information required for the interference measurement;
determining, by the receiving side, that the interference measurement is triggered; and
performing, by the receiving side, the interference measurement on the interference sending side in the delay-Doppler domain based on the target configuration information.

Optionally, in a case that the receiving side performs interference measurement on the interference sending side, the interference management process may be triggered by the sending side.

Optionally, in a case that the receiving side performs interference measurement on the interference sending side, target configuration information required for the interference measurement may be determined first, for example, the target configuration information may be determined based on the first indication information of the sending side.

Optionally, after determining the target configuration information, the receiving side may further determine that the interference measurement is triggered. For example, it may be directly determined that the interference measurement is triggered because the target configuration information is received.

Optionally, after determining that the interference measurement is triggered, the receiving side may perform the interference measurement on the interference sending side in the delay-Doppler domain based on the target configuration information.

Optionally, the determining, by the receiving side, target configuration information required for the interference measurement includes:

receiving, by the receiving side, first indication information sent by the sending side, where the first indication information is used for indicating the target configuration information; and
determining, by the receiving side, the target configuration information based on the first indication information.

Optionally, in a case that the interference management process is triggered by the sending side, when determining target configuration information required for the interference measurement, the receiving side may receive first indication information that is used for indicating the target configuration information and that is sent by the sending side, and then determine the target configuration information based on the first indication information.

Optionally, the determining, by the receiving side, that the interference measurement is triggered includes at least one of the following:

determining, by the receiving side after the receiving side receives the first indication information, that the interference measurement is triggered;

determining, by the receiving side in a case of determining that a signal-to-interference-plus-noise ratio (signal-to-noise and interference ratio, SINR) is greater than a first threshold, that the interference measurement is triggered, where the SINR is obtained based on the receiving measurement on the first pilot; and

determining, by the receiving side in a case of determining that a bit error rate of a receiver is greater than a second threshold, that the interference measurement is triggered.

Optionally, in a case that the interference management process is triggered by the sending side, the receiving side may receive first indication information used for indicating the target configuration information, and then determine that the interference measurement is triggered.

For example, the sending side may send part or all of the target configuration information to the receiving side through the first indication information, where the target configuration information may be information used for indicating an interference measurement position; and

the sending side and the interference sending side can exchange pilot configuration information with each other through a specific communication protocol.

For example, when being both base stations, the sending side and the interference sending side can exchange pilot configuration information through an X2 interface.

Optionally, after sending part or all of the target configuration information, the sending side may send the remaining target configuration information again to trigger interference measurement on the receiving side.

Optionally, after the sending side sends part or all of the target configuration information to the receiving side, the receiving side may directly determine that the interference measurement is triggered.

Optionally, the interference management process may be triggered by the receiving side itself.

Optionally, the receiving side determines, in a case of determining that a signal-to-interference-plus-noise ratio SINR is greater than a first threshold, that the interference measurement is triggered.

For example, the sending side may send part or all of the target configuration information to the receiving side through the first indication information, where the target configuration information may be information used for indicating an interference measurement position; and Subsequently, the receiving side may determine, in a case of determining that a signal-to-interference-plus-noise ratio SINR is greater than a first threshold, that the interference measurement is triggered; and then may perform the interference measurement on the interference sending side in the delay-Doppler domain based on the target configuration information.

Optionally, the receiving side determines, in a case of determining that a bit error rate of a receiver is greater than a second threshold, that the interference measurement is triggered.

For example, the sending side may send part or all of the target configuration information to the receiving side through the first indication information, where the target configuration information may be information used for indicating an interference measurement position; and Subsequently, the receiving side may determine, in a case of determining that a bit error rate of a receiver is greater than a second threshold, that the interference measurement is triggered, and then may perform the interference measurement on the interference sending side in the delay-Doppler domain based on the target configuration information.

Optionally, the performing, by the receiving side, interference measurement on the interference sending side in a delay-Doppler domain includes:

determining, by the receiving side, that the interference measurement is triggered; and

determining, by the receiving side, target configuration information required for the interference measurement;

performing, by the receiving side, the interference measurement on the interference sending side in the delay-Doppler domain based on the target configuration information.

Optionally, in a case that the receiving side performs interference measurement on the interference sending side, the receiving side may first trigger the interference management process and then obtain target configuration information.

Optionally, in a case that the receiving side performs interference measurement on the interference sending side, it may be first determined that the interference measurement is triggered. For example, it may be determined that the interference measurement is triggered based on information such as a signal-to-noise ratio.

Optionally, after determining that the interference measurement is triggered, the receiving side may further determine target configuration information required for the interference measurement. For example, after requesting the target configuration information from the sending side, the receiving side may determine the target configuration information based on the first indication information returned by the sending side.

Optionally, after determining target configuration information required for the interference measurement, the receiving side may perform the interference measurement on the interference sending side in the delay-Doppler domain based on the target configuration information.

Optionally, the determining, by the receiving side, that the interference measurement is triggered includes at least one of the following:

determining, by the receiving side in a case of determining that a signal-to-interference-plus-noise ratio SINR is greater than a first threshold, that the interference measurement is triggered, where the SINR is obtained based on the receiving measurement on the first pilot; and

determining, by the receiving side in a case of determining that a bit error rate of a receiver is greater than a second threshold, that the interference measurement is triggered.

Optionally, the interference management process may be triggered by the receiving side itself.

Optionally, in a case that the interference management process is triggered by the receiving side itself, the receiving side may determine, in a case of determining that a signal-to-interference-plus-noise ratio SINR is greater than a first threshold, that the interference measurement is triggered.

For example, the receiving side may determine, in a case of determining that a signal-to-interference-plus-noise ratio SINR is greater than a first threshold, that the interference measurement is triggered; then may request the target configuration information from the sending side, and obtain part or all of the target configuration information returned by the sending side through the first indication information, where the target configuration information may be information used for indicating an interference measurement position; and then may perform the interference measurement on the interference sending side in the delay-Doppler domain based on the target configuration information.

Optionally, the receiving side determines, in a case of determining that a bit error rate of a receiver is greater than a second threshold, that the interference measurement is triggered.

For example, the receiving side may determine, in a case of determining that a bit error rate of a receiver is greater than a second threshold, that the interference measurement is triggered; then may request the target configuration information from the sending side, and obtain part or all of the target configuration information returned by the sending side through the first indication information, where the target configuration information may be information used for indicating an interference measurement position; and then may perform the interference measurement on the interference sending side in the delay-Doppler domain based on the target configuration information.

Optionally, the determining, by the receiving side, target configuration information required for the interference measurement includes:

sending, by the receiving side, interference measurement configuration request signaling to the sending side, where the interference measurement configuration request signaling is used for requesting the target configuration information;

receiving, by the receiving side, first indication information sent by the sending side based on the interference measurement configuration request signaling, where the first indication information is used for indicating the target configuration information; and

determining, by the receiving side, the target configuration information based on the first indication information.

Optionally, in a case that the interference management process is triggered by the receiving side itself, the receiving side may send interference measurement configuration request signaling to the sending side after determining that the interference measurement is triggered, to request the target configuration information.

Optionally, after receiving the interference measurement configuration request signaling, the sending side may send first indication information based on the interference measurement configuration request signaling, where the first indication information is used for indicating the target configuration information requested by the receiving side.

Optionally, after receiving the first indication information, the receiving side may determine the target configuration information based on the first indication information.

Optionally, the interference measurement configuration request signaling carries at least one of the following: uplink control information (Uplink Control Information, UCI), an uplink reference signal (e.g., Sounding Reference Signal, SRS), and an uplink medium access control control element (Medium Access Control Control Element, MAC CE).

Optionally, the interference measurement configuration request signaling carries one or more of the following: uplink control information UCI, an uplink reference signal such as SRS, or an uplink MAC CE.

Optionally, the target configuration information includes a resource position of the second pilot in a delay-Doppler domain resource grid, and a resource range of the interference measurement.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a resource position of the second pilot in a delay-Doppler domain resource grid, and a resource range of the interference measurement.

Specifically, the resource position of the second pilot in the delay-Doppler domain resource grid and the resource range of the interference measurement can be determined after the sending side and the interference sending side exchange pilot configuration information (the resource position of the first pilot and/or the resource position of the second pilot) with each other through a specific communication protocol. For example, when being both base stations, the sending side and the interference sending side can exchange respective pilot configuration information through the X2 interface, which may include a resource position of the second pilot in a delay-Doppler domain resource grid, and may further include a resource range (interference measurement Gap) for the receiving side to perform interference measurement.

Optionally, the target configuration information includes a time length of the interference measurement, a frame structure of the interference sending side, and a resource position of the second pilot in a delay-Doppler domain resource grid; and

transmission of a first signal is not performed in a measurement time, and the first signal is a signal sent by the sending side to the receiving side.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a time length of the interference measurement, a frame structure of the interference sending side, and a resource position of the second pilot in a delay-Doppler domain resource grid.

Specifically, the time length of the interference measurement, the frame structure of the interference sending side, and the resource position of the second pilot in the delay-Doppler domain resource grid may be determined after the sending side and the interference sending side interact with each other through a specific communication protocol. For example, when being both base stations, the sending side and the interference sending side can exchange the above information through the X2 interface, which may include the time length of the interference measurement, the frame structure of the interference sending side, and the resource position of the second pilot in the delay-Doppler domain resource grid.

For example, the signaling sent by the sending side includes two parts:

(1) The time length of the interference measurement, which may be in a unit of time slot/physical time. During the configured measurement time, the sending side sends no downlink signal to the receiving side, or the sending side sends no downlink signal to the receiving side in a specific position on the DD domain resource grid.

(2) The frame structure of the interference sending side, which includes the sizes of M and N, where M represents the number of resources in the delay dimension corresponding to the frame structure of the interference sending side, and N represents the number of resources in the Doppler dimension corresponding to the frame structure of the interference sending side, and an optional second pilot sending position (the resource position of the second pilot in the delay-Doppler domain resource grid).

The signaling sent by the sending side may be a message for a specific user, such as downlink control information (Downlink Control Information, DCI) or a radio resource control (Radio Resource Control, RRC) message.

The receiving side determines the interference measurement area according to the prior information in the signaling of the sending side. First, blind detection is performed on the area where the reference signal is sent by the interference sending side, and the receiving side performs interference channel measurement in the determined pilot area of the interference sending side.

Optionally, in a case that the time length of the interference measurement is explicitly indicated, the sending side may not send the initial signal within this time length. To be specific, transmission of a first signal is not performed in a measurement time, and the first signal is a signal sent by the sending side to the receiving side, to ensure that all the interference measured by the receiving side during the interference measurement is directed at the interference sending side.

Optionally, the target configuration information includes a time length of the interference measurement, a frame structure of the interference sending side, and a resource position of the second pilot in a delay-Doppler domain resource grid; and

in the resource position of the second pilot in the delay-Doppler domain resource grid, transmission of a first signal is not performed in a resource grid corresponding to the delay-Doppler domain, and the first signal is a signal sent by the sending side to the receiving side.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a time length of the interference measurement, a frame structure of the interference sending side, and a resource position of the second pilot in a delay-Doppler domain resource grid.

Specifically, the time length of the interference measurement, the frame structure of the interference sending side, and the resource position of the second pilot in the delay-Doppler domain resource grid may be determined after the sending side and the interference sending side interact with each other through a specific communication protocol. For example, when being both base stations, the sending side and the interference sending side can exchange the above information through the X2 interface, which may include the time length of the interference measurement, the frame structure of the interference sending side, and the resource position of the second pilot in the delay-Doppler domain resource grid.

Optionally, in a case that the resource position of the second pilot in the delay-Doppler domain resource grid is explicitly indicated, the sending side may not send the initial signal in the resource position of the second pilot in the delay-Doppler domain resource grid. To be specific, in the resource position of the second pilot in the delay-Doppler domain resource grid, transmission of a first signal is not performed, and the first signal is a signal sent by the sending side to the receiving side, to ensure that all the interference measured by the receiving side in the measurement range corresponding to the resource position of the second pilot in the delay-Doppler domain resource grid is directed at the interference sending side.

Optionally, the first indication information is carried in at least one of the following:
a synchronization signal block (Synchronization Signal and PBCH block, SSB), a physical broadcast channel (Physical broadcast channel, PBCH), a system information block (System Information Block, SIB), DCI, RRC, and a MAC CE. Optionally, the first indication information may be carried in one or more of the following:
an SSB, a PBCH, a SIB, DCI, RRC, or a MAC CE.

Optionally, the first indication information includes at least one of the following:

a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and
first direct indication information, where the first direct indication information is used for directly indicating the target configuration information.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may directly include the target configuration information.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may include first direct indication information, used for directly indicating the target configuration information, for example, directly includes the target configuration information itself.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may include a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and

For example, the indication configuration information table may include second indexes: an "index 1", an "index 2", and an "index 3", where configuration information corresponding to the "index 1" is "configuration information A", configuration information corresponding to the "index 2" is "configuration information B", and configuration information corresponding to the "index 3" is "configuration information C". If the first index indicates the "index 2", it may be determined that the target configuration information includes the "configuration information B" corresponding to the "index 2".

For example, N types of interference power measurement GAP patterns may be indicated through the above table lookup, and $\lceil \log_2 N \rceil$ bits may be used to indicate the first index.

Optionally, the determining, by the receiving side, target configuration information required for the interference measurement includes:

directly determining, by the receiving side, the target configuration information.

Optionally, in a case that the interference management process is triggered by the receiving side itself, the receiving side can directly determine the target configuration information by itself, for example, can directly determine an IM detection area (including the position of the second pilot in the delay-Doppler domain resource grid) by itself, which can be used as a measurement area for interference measurement in the delay-Doppler domain resource grid.

Optionally, the method further includes:

sending, by the receiving side, the target configuration information to the sending side, where the target configuration information is used for instructing the interference sending side through the sending side to configure the second pilot based on the target configuration information.

Optionally, in a case that the interference management process is triggered by the receiving side itself, the receiving side can directly determine the target configuration information by itself, and on this basis, the receiving side needs to send the target configuration information determined by the receiving side itself to the sending side, and the sending side learns the target configuration information determined by the receiving side itself and then needs to further indicate the target configuration information to the interference sending side, so that the interference sending side determines the configuration of the second pilot, that is, configures the second pilot in the IM detection area for interference measurement, to ensure that the receiving side can accurately measure the second pilot within the resource range of the interference measurement.

Optionally, the performing, by the receiving side, interference measurement on the interference sending side in a delay-Doppler domain includes:

determining, by the receiving side, a measurement area of the interference measurement in the delay-Doppler domain resource grid based on the target configuration information; and
performing, by the receiving side, the interference measurement on the interference sending side in the measurement area.

Optionally, in a case that the receiving side performs interference measurement on the interference sending side in the delay-Doppler domain, the receiving side can determine a measurement area of the interference measurement in the delay-Doppler domain resource grid based on the target configuration information; and then can perform the interference measurement on the interference sending side in the measurement area.

Optionally, the determining, by the receiving side, a measurement area of the interference measurement in the delay-Doppler domain resource grid based on the target configuration information includes:

determining, by the receiving side, a resource position of the second pilot in the delay-Doppler domain resource grid based on the target configuration information; and
determining, by the receiving side, that the measurement area is the resource position of the second pilot in the delay-Doppler domain resource grid, where the resource position of the second pilot of the interference sending side in the delay-Doppler domain resource grid does not coincide with a resource grid range corresponding to the first pilot.

Optionally, when the receiving side determines a measurement area of the interference measurement in the delay-Doppler domain resource grid based on the target configuration information, the receiving side can first determine a resource position of the second pilot in the delay-Doppler domain resource grid based on the target configuration information; and can determine that the measurement area is the resource position of the second pilot in the delay-Doppler domain resource grid, where the resource position of the second pilot of the interference sending side in the delay-Doppler domain resource grid does not coincide with a resource grid range corresponding to the first pilot.

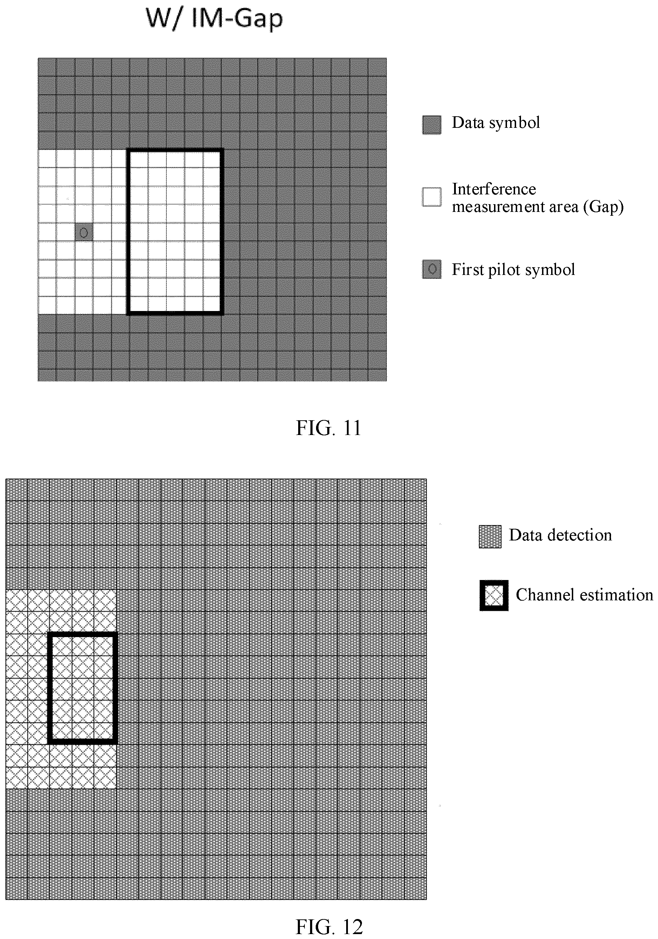

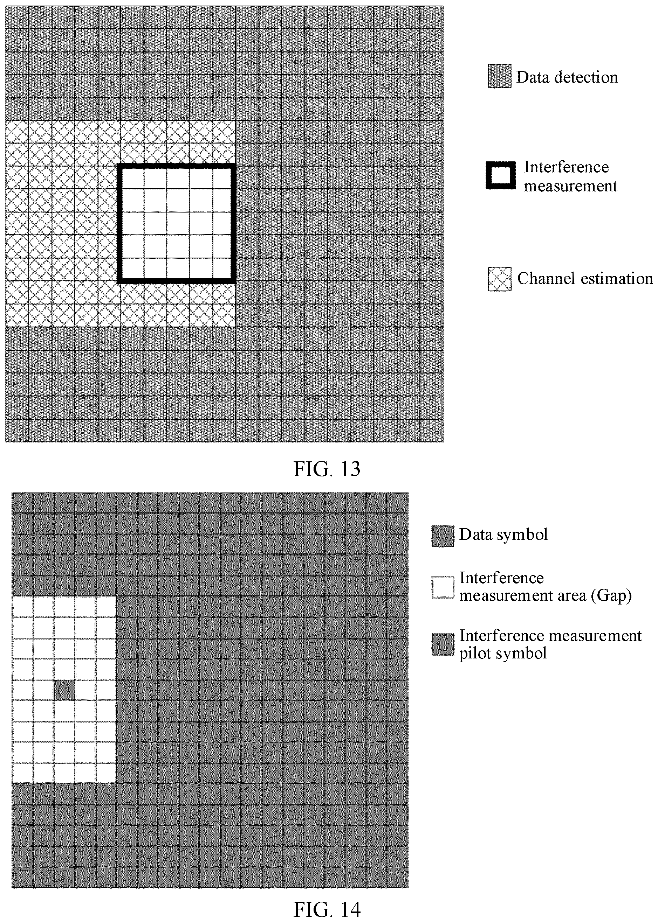

FIG. 10 is a schematic diagram 1 of pilot mapping of a delay-Doppler domain resource grid according to an embodiment of this application. FIG. 11 is a schematic diagram 2 of pilot mapping of a delay-Doppler domain resource grid according to an embodiment of this application. FIG. 12 is a schematic diagram 1 of a measurement area of a delay-Doppler domain resource grid according to an embodiment of this application. FIG. 13 is a schematic diagram 2 of a measurement area of a delay-Doppler domain resource grid according to an embodiment of this application. As shown in FIG. 10 to FIG. 13, FIG. 10 shows a single-point pulse pilot in the DD domain. It can be seen that after channel coupling, the distribution of sample points in the DD domain on the receiving side becomes the form in FIG. 12. The part filled with oblique grids in the bold box is not interfered by the offset of the data symbols, and therefore can be used for pilot detection to perform channel measurement. If the system requires interference measurement, it is necessary to introduce a new blank D-RE (the part in the bold box in FIG. 11 can be called interference measurement Gap, interference measurement required Gap, interference measurement range, or interference measurement area) in addition to the original GAP in FIG. 10 to perform interference measurement. As shown in FIG. 11, the additional D-RE part introduced in the box is used for interference measurement. It can be seen that according to the pilot and data symbol mapping presented in FIG. 11, it becomes the form of FIG. 13 after channel coupling, and REs in the box are not affected by power leakage of any sent pilot and data, this part of resources can be used for accurate interference measurement. Specifically, in this embodiment of this application, sending of the second pilot of the interference sending side can be configured in the position of the IM detection surrounded by the box in FIG 13. To be specific, the known second pilot signal of the interference sending side exists in the position of the IM detection, and then the pilot power component detection on the DD domain grid points can be performed in the IM detection area to estimate the interference channel between the interference sending side and the receiving side.

Further, in order to accurately measure the interference channel matrix, the IM detection area (the resource position of the second pilot in the delay-Doppler domain resource grid) may satisfy the following conditions:

The second pilot of the interference sending side is in the IM detection area, and the maximum delay and Doppler offsets caused by interference channel coupling are still in the IM detection area. Therefore, the receiving side needs to know the position of the second pilot of the interference sending side; and the sending side can adjust the sending position of its own first pilot, so that the first pilot is connected to the second pilot of the interference sending side to save part of the Gap overheads.

Optionally, the resource position of the second pilot of the interference sending side in the delay-Doppler domain resource grid does not coincide with a resource grid range corresponding to the first pilot, and the resource position of the second pilot of the interference sending side in the delay-Doppler domain resource grid may be adjacent to or connected to the resource grid range corresponding to the first pilot.

Optionally, the performing, by the receiving side, interference measurement on the interference sending side in a delay-Doppler domain includes:

determining, by the receiving side, a measurement area in a resource grid range of the delay-Doppler domain corresponding to the first pilot; and
performing, by the receiving side, the interference measurement on the interference sending side in the measurement area.

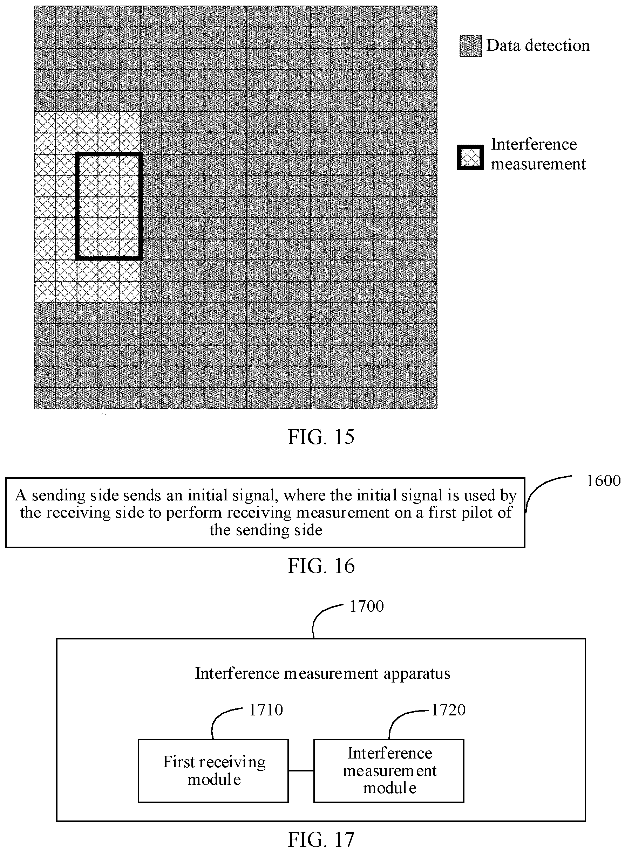

Optionally, when the topological positions of the transmitting/receiving node in the channel changes slowly, a more overhead-saving sending manner may be used. To be specific, after the interference management process is triggered, the sending side sends no pilot in the IM stage, but still sends data. FIG. 14 is a schematic diagram 3 of pilot mapping of a delay-Doppler domain resource grid according to an embodiment of this application. FIG. 15 is a schematic diagram 3 of a measurement area of a delay-Doppler domain resource grid according to an embodiment of this application. As shown in FIG. 14 and FIG. 15, the original pilot area (the resource grid range of the delay-Doppler domain corresponding to the first pilot) (pilot pulse + gap) can be reused as an IM detection area, and the interference sending side sends a pilot in this reused area. The channel estimation of the current frame of the cell of the receiving side can be resolved in another manner: For example, the channel estimation of the previous frame is directly used if the channel of a plurality of consecutive frames remains unchanged, or channel prediction is performed if the channel of a plurality of consecutive frames changes regularly.

Optionally, when the receiving side determines a measurement area of the interference measurement in the delay-Doppler domain resource grid based on the target configuration information, the receiving side can determine a measurement area in a resource grid range of the delay-Doppler domain corresponding to the first pilot.

Optionally, the determining, by the receiving side, a measurement area in a resource grid range of the delay-Doppler domain corresponding to the first pilot includes:

determining, by the receiving side based on presetting, that the measurement area is the resource grid range corresponding to the first pilot;
determining, by the receiving side based on protocol pre-configuration, that the measurement area is the resource grid range corresponding to the first pilot; and
determining, by the receiving side based on second indication information of the sending side, that the measurement area is the resource grid range corresponding to the first pilot.

Optionally, as shown in FIG. 9, when the receiving side determines a measurement area in a resource grid range of the delay-Doppler domain corresponding to the first pilot, the measurement area of the interference pilot may be consistent with that of the original pilot. Actually, the interference channel and the communication channel may be different in delay and Doppler, which also needs to be considered during Gap configuration.

Optionally, in a case that the receiving side determines a measurement area in a resource grid range of the delay-Doppler domain corresponding to the first pilot, the interference measurement may be triggered by the receiving side itself or by the sending side.

Optionally, in a case that the receiving side determines a measurement area in a resource grid range of the delay-Doppler domain corresponding to the first pilot, the prior information about the pilot position of the interference sending side may be configured by the sending side to the receiving side. Theoretically, for a specific receiving side, it is assumed that the maximum delay and Doppler of the communication channel of the sending side can be $\tau_{max}^0$ and $v_{max}^0$ and the maximum delay and Doppler of the interference channel of the interference sending side can be $\tau_{max}^1$ and $v_{max}^1$, and when $\tau_{max}^0 > \tau_{max}^1$ and $v_{max}^0 > v_{max}^1$, the Gap required for interference channel measurement needs to be reconfigured. Actually, for the sending side, $\tau_{max}^0$ and $v_{max}^0$ can be fed back by the receiving side or obtained through uplink measurement using channel reciprocity; but the sending side has no way of knowing the prior information $\tau_{max}^1$ and $v_{max}^1$ of the channel between the interference sending side and the receiving side. Therefore, when determining the actually required Gap, the receiving side can determine the measurement area based on presetting, or determine the measurement area based on protocol pre-configuration, or determine the measurement area based on the second indication information of the sending side.

Optionally, the receiving side can determine, based on presetting, that the measurement area is the resource grid range corresponding to the first pilot.

Optionally, the receiving side can determine, based on protocol pre-configuration, that the measurement area is the resource grid range corresponding to the first pilot.

Optionally, the receiving side can determine, based on second indication information of the sending side, that the measurement area is the resource grid range corresponding to the first pilot.

Optionally, the Gap area (measurement area) required for interference measurement may not need to be indicated, and the resource grid area of the first pilot directly continues to be used.

Optionally, the sending side may directly send a 1-bit user-specific message to trigger interference management, instructing the receiving side to measure interference in the resource grid region of the first pilot.

Optionally, the determining, by the receiving side, a measurement area in a resource grid range of the delay-Doppler domain corresponding to the first pilot includes:

determining, by the receiving side, a target position coordinate of the measurement area based on third indication information of the sending side.

Optionally, when the receiving side determines a measurement area in a resource grid range of the delay-Doppler domain corresponding to the first pilot, where the measurement area may be part of the resource grid range corresponding to the first pilot, the receiving side can determine a target position coordinate of the measurement area based on third indication information of the sending side.

For example, there are J groups of optional values for the interference measurement area. Assuming that the first pilot position is $(k_p, l_p)$, $(k_p, l_p)$ represents the coordinate of the pilot pulse on the delay-Doppler domain resource grid, $k_p$ corresponds to the Doppler dimension, and $l_p$ corresponds to the delay dimension; and the area of Gap is $[k_p - 2k_v, k_p + 2k_v]$ and $[l_p - l_v, l_p + l_v]$, $[k_p - 2k_v, k_p + 2k_v]$ represents the coordinate range in the Doppler dimension, and $[l_p - l_v, l_p + l_v]$ represents the coordinate range in the delay dimension, a set of optional values of the target position coordinate can be:

$$G = \{[k_p - 2k_v - k_j, k_p + 2k_v + k_j], [l_p - l_v - l_j, l_p + l_v + l_j], j = 0,1,2, ..., J - 1, k_0 = 0, l_0 = 0, k_j \geq 0, l_j \geq 0 \}.$$

Optionally, the third indication information includes:

a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and second direct indication information, where the second direct indication information is used for directly indicating the target position coordinate.

Optionally, the third indication information sent by the sending side may be a broadcast message such as PBCH in SSB or SIB message, or may be a user-specific message such as DCI or RRC message. These optional messages are used to configure the target position coordinate of the measurement area in the following manners:

(1) The target position coordinate of the measurement area (that is, the second direct indication information) is directly configured by using the user-specific message.
(2) The broadcast message are used to broadcast the J groups of optional values of the Gap area, and the user-specific message is used to send $\lceil \log_2 N \rceil$ bits to indicate a specific option (namely, the third index).

Optionally, the sending side may directly send the target position coordinate of the measurement area to the receiving side through the third indication information.

Optionally, the third indication information may include second direct indication information, which is used to directly indicate the target position coordinate of the measurement area.

Optionally, the third indication information may include a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and

For example, the indication configuration information table may include fourth indexes: an "index 4", an "index 5", and an "index 6", where the position coordinate corresponding to "index 4" is "position coordinate D", the position coordinate corresponding to "index 5" is "position coordinate E", and the position coordinate corresponding to "index 6" is "position coordinate F". If the third index indicates "index 4", it can be determined that the target position coordinate of the measurement area includes the "position coordinate D" corresponding to the "index 4".

Optionally, the method further includes:
sending, by the receiving side, fourth indication information to the sending side, where the fourth indication information is used for indicating whether the target position coordinate is available.

Optionally, the receiving side can send fourth indication information to the sending side, to indicate whether the target position coordinate is available.

Optionally, the receiving side may send 1-bit feedback information (fourth indication information), indicating whether the currently selected interference measurement area is appropriate (whether the target position coordinate is available). The sending side may reconfigure the interference measurement area according to the feedback message, which may also be referred to as an interference measurement Gap area or an interference measurement range.

For example, assuming that the current configuration is $\{[k_p - 2k_v - k_j, k_p + 2k_v + k_j], [l_p - l_v - l_j, l_p + l_v + l_j]\}$, when the fourth indication information received by the sending side is 0, the configuration becomes $\{[k_p - 2k_v - k_{j+1}, k_p + 2k_v + k_{j+1}], [l_p - l_v - l_{j+1}, l_p + l_v + l_{j+1}]\}$ and is indicated to the receiving side. When the received fourth indication information is 1, the configuration remains unchanged, and 1 bit may be used to indicate to the receiving side or not.

Optionally, in a case that the interference sending side uses the OFDM system, the signal includes a first time unit used for indicating the interference measurement; and
the performing, by the receiving side, interference measurement on the interference sending side includes:

determining, by the receiving side, a time frequency domain resource position corresponding to the second pilot; and
performing, by the receiving side, the interference measurement on the interference sending side based on the first time unit and the time frequency domain resource position corresponding to the second pilot.

Optionally, both the receiving side and the sending side adopt the OTFS system, and the interference sending side adopts the OFDM system, that is, for the coexistence system of OTFS and OFDM, the problems to be faced in the interference control are more complicated. In a communication system, since the modulation symbols are mapped in the TF domain, the interference on some subcarriers in the TF domain undergoes SFFT and then is reflected as the interference of the entire area in the DD domain. Therefore, for the OTFS system, if the interference brought by the OFDM system is to be measured, it is necessary to measure the D-RE resources in the entire time slot.

Specifically, since the pilot mapping mode of the OFDM system is to hash and place a reference signal sequence on the TF domain resource grid according to a certain pattern, when the reference signal sequence is transformed into the DD domain through SFFT, the transformed reference signal sequence is distributed throughout the entire DD domain resource grid. If the reference signal and data in the TF domain are orthogonally multiplexed in the same subframe in this case, the reference signal and data transformed to the DD domain are non-orthogonally superimposed on a D-RE, which is not conducive to detection. Therefore, for the coexistence system of OTFS and OFDM, the interference measurement can be carried out in the TF domain.

Specifically, when performing interference measurement in the TF domain, the receiving side can first determine a time frequency domain resource position corresponding to the second pilot; and then perform the interference measurement on the interference sending side based on the first time unit and the time frequency domain resource position corresponding to the second pilot.

Optionally, the first time unit is blank, or the first time unit includes the first pilot, or the first time unit includes the first pilot and transmission data; and

the determining, by the receiving side, a time frequency domain resource position corresponding to the second pilot includes:

receiving, by the receiving side, sixth indication information sent by the sending side, where the sixth indication information is used for indicating the time frequency domain resource position corresponding to the second pilot; and

determining, by the receiving side, the time frequency domain resource position corresponding to the second pilot based on the sixth indication information.

Optionally, the receiving side can receive sixth indication information sent by the sending side, where the sixth indication information is used for indicating the time frequency domain resource position corresponding to the second pilot; and then the receiving side can determine the time frequency domain resource position corresponding to the second pilot based on the sixth indication information.

Optionally, the first time unit may be an interference measurement subframe or another communication time unit, which is not limited in this embodiment of this application.

For example, the sending side can configure an interference measurement subframe, which is a blank subframe, and no signal or data is sent on its resources, and the sending side can indicate the position of the interference measurement subframe in the radio frame by broadcasting or receiving-side dedicated signaling, to trigger the receiving-side measurement behavior. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can convert the received signal sample points to the DD domain, and use the DD domain pilot detection method to obtain the DD domain channel, and then the component value of the received pilot on each RE in the TF domain is calculated, where the pilot components are subtracted from the received signal to obtain the neighboring cell interference signal and the noise part. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain.

For example, the sending side can configure an interference measurement subframe, which is a subframe containing the first pilot and data that are orthogonal on the DD domain resource; the sending side can indicate the position of the interference measurement subframe in the radio frame by broadcasting or receiving-side dedicated signaling, to trigger the receiving-side measurement behavior. Then, the receiving side can convert the received signal sample points to the DD domain, use the DD domain pilot detection method to obtain the DD domain channel, and use the estimated channel to demodulate the DD domain data symbols. Then, the component value of the received DD domain pilot data transformed into the TF domain on each RE can be calculated. The components are subtracted from the received signal to obtain the neighboring cell interference signal and the noise part. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain.

In this embodiment of this application, the introduction of additional overheads can be avoided by configuring the interference measurement subframe.

Optionally, the first time unit is blank, or the first time unit includes the first pilot, or the first time unit includes the first pilot and transmission data; and

the determining, by the receiving side, a time frequency domain resource position corresponding to the second pilot of the interference sending side includes:

performing, by the receiving side, blind detection, to determine the time frequency domain resource position corresponding to the second pilot.

Optionally, the receiving side can perform blind detection, to determine the time frequency domain resource position corresponding to the second pilot.

Optionally, the first time unit may be an interference measurement subframe or another communication time unit, which is not limited in this embodiment of this application.

For example, the sending side can configure an interference measurement subframe, which is a blank subframe, and no signal or data is sent on its resources, and the sending side can indicate the position of the interference measurement subframe in the radio frame by broadcasting or receiving-side dedicated signaling, to trigger the receiving-side measurement behavior. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can convert the received signal sample points to the DD domain, and use the DD domain pilot detection method to obtain the DD domain channel, and then the component value of the received pilot on each RE in the TF domain is calculated, where the pilot components are subtracted from the received signal to obtain the neighboring cell interference signal and the noise part. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain.

For example, the sending side can configure an interference measurement subframe, which is a subframe containing the first pilot and data that are orthogonal on the DD domain resource; the sending side can indicate the position of the interference measurement subframe in the radio frame by broadcasting or receiving-side dedicated signaling, to trigger the receiving-side measurement behavior. Then, the receiving side can convert the received signal sample points to the DD domain, use the DD domain pilot detection method to obtain the DD domain channel, and use the estimated channel to demodulate the DD domain data symbols. Then, the component value of the received DD domain pilot data transformed into the TF domain on each RE can be calculated. The components are subtracted from the received signal to obtain the neighboring cell interference signal and the noise part. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain.

Optionally, the performing interference measurement on the interference sending side includes:

performing, by the receiving side, measurement on an interference channel based on the time frequency domain resource position corresponding to the second pilot.

Optionally, after determining a time frequency domain resource position corresponding to the second pilot, the receiving side can perform measurement on an interference channel based on the time frequency domain resource position corresponding to the second pilot.

Optionally, in a case that the first time unit includes the first pilot or in a case that the first time unit includes the first pilot and transmission data, the performing interference measurement on the interference sending side further includes:

transforming, by the receiving side, the received signal to a delay-Doppler domain;

obtaining, by the receiving side, a component value of the first pilot on each RE in a TF domain; and

subtracting the component value of the first pilot from the received signal, to obtain an interference signal and noise part.

Optionally, the sending side can configure an interference measurement subframe, which is a subframe containing the first pilot and data that are orthogonal on the DD domain resource; the sending side can indicate the position of the interference measurement subframe in the radio frame by broadcasting or receiving-side dedicated signaling, to trigger the receiving-side measurement behavior. Then, the receiving side can convert the received signal sample points to the DD domain, use the DD domain pilot detection method to obtain the DD domain channel, and use the estimated channel to demodulate the DD domain data symbols. Then, the component value of the received DD domain pilot data transformed into the TF domain on each RE can be calculated. The components are subtracted from the received signal to obtain the neighboring cell interference signal and the noise part. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain.

Optionally, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can convert the received signal sample points to the DD domain, and use the DD domain pilot detection method to obtain the DD domain channel, and then the component value of the received pilot on each RE in the TF domain is calculated, where the pilot components are subtracted from the received signal to obtain the neighboring cell interference signal and the noise part. Then, the receiving side can perform blind detection to determine the time-frequency domain resource position corresponding to the second pilot. Then, the receiving side can perform neighboring cell interference channel measurement (measurement for the second pilot of the interference sending side) in the known pilot position in the TF domain.

Optionally, the performing, by the receiving side, interference measurement on the interference sending side includes:

receiving, by the receiving side, seventh indication information sent by the sending side, where the seventh indication information is used for indicating a measurement range in a delay-Doppler domain resource grid corresponding to the interference measurement, where a delay-Doppler domain resource grid range corresponding to the interference measurement does not coincide with a resource grid range corresponding to the first pilot; and

determining, by the receiving side, an average interference power based on a receiving sampling point in the signal in the measurement range.

Optionally, the interference measurement may not be pilot-based interference channel estimation, and may only be used to estimate the neighboring cell interference power level.

Optionally, in a case that the receiving side, the sending side, and the interference sending side all use the OTFS system, or in a case that the receiving side and the sending side use the OTFS system and the interference sending side uses the OFDM system, the DD domain Gap resource used for the interference measurement on the receiving side does not need to overlap with the pilot on the interference sending side and its Gap resource. As shown in FIG. 11, a blank IM Gap can be added to the right of the Gap resource of the pilot required for communication. The IM Gap can be configured by the sending side, and the pilot position of the interference sending side does not need to be considered. The DD domain sample point set received by the receiving side is shown in FIG. 12, and the receiving side counts the average interference power at the sample points within the range of the bold box.

Specifically, when the topological positions of the transmitting/receiving node in the channel changes slowly, a more overhead-saving sending manner may be further used. To be specific, after the interference management process is triggered, the sending side sends no pilot in the IM stage, but still sends data. The original pilot area (pilot pulse + gap) can be reused as an IM detection area, and the interference sending side sends a pilot in this reused area, as shown in FIG. 11 and FIG. 12. In this case, the channel estimation of the current frame of the cell of the receiving side can be resolved in another manner: For example, the channel estimation of the previous frame is directly used if the channel of a plurality of consecutive frames remains unchanged, or channel prediction is performed if the channel of a plurality of consecutive frames changes regularly.

In addition, rate matching in the DD domain can be further performed for the IM Gap. When the number of information bits and the modulation order are given, the channel coding (LDPC, Polar, or the like) can be controlled to achieve the required code rate by adjusting the size of the IM Gap resource and changing the number of D-REs that actually carry data.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

FIG. 16 is a schematic flowchart 2 of an interference measurement method according to an embodiment of this application. As shown in FIG. 16, the method includes the following step 1600:

Step 1600: A sending side sends an initial signal, where the initial signal is used by the receiving side to perform receiving measurement on a first pilot of the sending side;

a signal corresponding to the receiving measurement includes the initial signal and a second pilot sent by an interference sending side, the interference sending side is an interference source of the receiving measurement, and the second pilot is used by the receiving side to perform interference measurement on the interference sending side; and

both the receiving side and the sending side use an orthogonal time frequency space OTFS system.

Specifically, to overcome the defect of large measurement overheads caused by many types of reference signals in the conventional technology, this embodiment of this application can realize the transmission of the first pilot based on the OTFS system; and under the framework of the single-point pulse or sequence pilot in the delay-Doppler domain, the interference measurement and control method based on the OTFS system is realized. Therefore, excessive definition and cumbersome interpretation of the reference signal in the communication system can be avoided, and pilot overheads and signaling overheads can be saved.

Specifically, in this embodiment of this application, pilot mapping in a DD domain may be used for interference management. If the received interference of the signal on the receiving side is regarded as a part of the equivalent channel, the estimation and elimination of the interference is essentially a part of the generalized channel estimation and equalization. Therefore, in the domain where the channel estimation and equalization is implemented, the interference management can also be implemented. Therefore, the interference measurement performed in the TF domain in the OFDM system can be migrated to the DD domain in the OTFS system.

In the communication system, this embodiment of this application can use an IM-CSI-RS (a specially configured ZP-CSI-RS) for interference management. Since the modulation symbols of the OFDM system are multiplexed in the time-frequency domain, the interference power measurement (namely, interference measurement) can be performed through the blank resource in a specific position in the time slot (namely, reserved IM-CSI-RS position), and the magnitude of the interference on a specific time-frequency resource can be roughly measured, to complete the interference measurement.

Optionally, the sending side and the receiving side are a pair of communication nodes performing wireless communication.

Optionally, the interference sending side is an interference source when the receiving side performs measurement.

For example, in the NR system, the sending side and the receiving side are a base station and a UE of a current cell, and the interference sending side is a base station of a neighboring cell.

Optionally, the sending side may first send an initial signal to the receiving side, but when the initial signal is received and measured on the receiving side, interference caused when the second pilot is sent by the interference sending side is further received and measured. To be specific, the receiving side may receive a signal, and the received signal includes the second pilot sent by the interference sending side and the initial signal, so that the receiving side can measure the second pilot in the measurement position, that is, realize the interference measurement on the interference sending side.

Further, in this embodiment of this application, by configuring IM-CSI-RS in different resource positions, the statistical characteristics of the interference distribution in the resource occupied by the subframe can be obtained, and then used for the receiver algorithm to perform interference cancellation, or used for information reporting to perform interference control.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, the method further includes:

sending, by the sending side, first indication information to the receiving side, where the first indication information is used for indicating target configuration information required for the interference measurement.

Optionally, in a case that the receiving side performs interference measurement on the interference sending side, the interference management process may be triggered by the sending side.

Optionally, in a case that the interference management process is triggered by the sending side, the sending side can send first indication information to the receiving side, to indicate target configuration information required for the interference measurement to the receiving side; and when determining target configuration information required for the interference measurement, the receiving side may receive first indication information that is used for indicating the target configuration information and that is sent by the sending side, and then determine the target configuration information based on the first indication information.

Optionally, in a case that the receiving side performs interference measurement on the interference sending side, target configuration information required for the interference measurement may be determined first, for example, the target configuration information may be determined based on the first indication information of the sending side.

Optionally, the method further includes:

receiving interference measurement configuration request signaling sent by the receiving side, where the interference measurement configuration request signaling is used for requesting the target configuration information; and

sending, by the sending side, first indication information based on the interference measurement configuration request signaling, where the first indication information is used for indicating the target configuration information.

Optionally, in a case that the interference management process is triggered by the receiving side itself, the receiving side may send interference measurement configuration request signaling to the sending side after determining that the interference measurement is triggered, to request the target configuration information.

Optionally, after receiving the interference measurement configuration request signaling, the sending side may send first indication information based on the interference measurement configuration request signaling, where the first indication information is used for indicating the target configuration information requested by the receiving side.

Optionally, after receiving the first indication information, the receiving side may determine the target configuration information based on the first indication information.

In a case that the interference management process is triggered by the receiving side itself, the receiving side may determine, in a case of determining that a signal-to-interference-plus-noise ratio SINR is greater than a first threshold, that the interference measurement is triggered.

For example, the receiving side may determine, in a case of determining that a signal-to-interference-plus-noise ratio SINR is greater than a first threshold, that the interference measurement is triggered; then may request the target configuration information from the sending side, and obtain part or all of the target configuration information returned by the sending side through the first indication information, where the target configuration information may be information used for indicating an interference measurement position; and then may perform the interference measurement on the interference sending side in the delay-Doppler domain based on the target configuration information.

Optionally, the receiving side determines, in a case of determining that a bit error rate of a receiver is greater than a second threshold, that the interference measurement is triggered.

For example, the receiving side may determine, in a case of determining that a bit error rate of a receiver is greater than a second threshold, that the interference measurement is triggered; then may request the target configuration information from the sending side, and obtain part or all of the target configuration information returned by the sending side through the first indication information, where the target configuration information may be information used for indicating an interference measurement position; and then may perform the interference measurement on the interference sending side in the delay-Doppler domain based on the target configuration information.

Optionally, the interference measurement configuration request signaling carries at least one of the following: uplink control information UCI, an uplink reference signal such as SRS, and an uplink MAC CE.

Optionally, the interference measurement configuration request signaling carries one or more of the following: uplink control information UCI, an uplink reference signal such as SRS, or an uplink MAC CE. Optionally, the first indication information is carried in at least one of the following:

an SSB, a PBCH, a SIB, DCI, RRC, and a MAC CE.

Optionally, the first indication information may be carried in one or more of the following:

SSB, PBCH, SIB, DCI, Radio Resource Control RRC, or Medium Access Control Control Element MAC CE.

Optionally, the first indication information includes at least one of the following:

a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and

first direct indication information, where the first direct indication information is used for directly indicating the target configuration information.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may directly include the target configuration information.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may include first direct indication information, used for directly indicating the target configuration information, for example, directly includes the target configuration information itself.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the first indication information may include a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and

For example, the indication configuration information table may include second indexes: an "index 1", an "index 2", and an "index 3", where configuration information corresponding to the "index 1" is "configuration information A", configuration information corresponding to the "index 2" is "configuration information B", and configuration information corresponding to the "index 3" is "configuration information C". If the first index indicates the " index 2", it may be determined that the target configuration information includes the "configuration information B" corresponding to the "index 2".

For example, K types of interference power measurement GAP patterns may be indicated through the above table lookup, and $\lceil \log_2 N \rceil$ bits may be used to indicate the first index.

Optionally, the target configuration information includes a resource position of the second pilot in a delay-Doppler domain resource grid, and a resource range of the interference measurement.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a resource position of the second pilot in a delay-Doppler domain resource grid, and a resource range of the interference measurement.

Specifically, the resource position of the second pilot in the delay-Doppler domain resource grid and the resource range of the interference measurement can be determined after the sending side and the interference sending side exchange pilot configuration information (the resource position of the first pilot and/or the resource position of the second pilot) with each other through a specific communication protocol. For example, when being both base stations, the sending side and the interference sending side can exchange respective pilot configuration information through the X2 interface, which may include a resource position of the second pilot in a delay-Doppler domain resource grid, and may further include a resource range for the receiving side to perform interference measurement.

Optionally, the target configuration information includes a time length of the interference measurement, a frame structure of the interference sending side, and a resource position of the second pilot in a delay-Doppler domain resource grid; and

transmission of a first signal is not performed in a measurement time, and the first signal is a signal sent by the sending side to the receiving side.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a time length of the interference measurement, a frame structure of the interference sending side, and a resource position of the second pilot in a delay-Doppler domain resource grid.

Specifically, the time length of the interference measurement, the frame structure of the interference sending side, and the resource position of the second pilot in the delay-Doppler domain resource grid may be determined after the sending side and the interference sending side interact with each other through a specific communication protocol. For example, when being both base stations, the sending side and the interference sending side can exchange the above information through the X2 interface, which may include the time length of the interference measurement, the frame structure of the interference sending side, and the resource position of the second pilot in the delay-Doppler domain resource grid.

For example, the signaling sent by the sending side includes two parts:

(1) The time length of the interference measurement, which may be in a unit of time slot/physical time. During the configured measurement time, the sending side sends no downlink signal to the receiving side, or the sending side sends no downlink signal to the receiving side in a specific position on the DD domain resource grid.

(2) The frame structure of the interference sending side, which includes the sizes of M and N, and an optional second pilot sending position (the resource position of the second pilot in the delay-Doppler domain resource grid).

The signaling sent by the sending side may be a message for a specific user, such as DCI or RRC message.

The receiving side determines the interference measurement area according to the prior information in the signaling of the sending side. First, blind detection is performed on the area where the reference signal is sent by the interference sending side, and the receiving side performs interference channel measurement in the determined pilot area of the interference sending side.

Optionally, in a case that the time length of the interference measurement is explicitly indicated, the sending side may not send the initial signal within this time length. To be specific, transmission of a first signal is not performed in a measurement time, and the first signal is a signal sent by the sending side to the receiving side, to ensure that all the interference measured by the receiving side during the interference measurement is directed at the interference sending side.

Optionally, the target configuration information includes a time length of the interference measurement, a frame structure of the interference sending side, and a resource position of the second pilot in a delay-Doppler domain resource grid; and

in the resource position of the second pilot in the delay-Doppler domain resource grid, transmission of a first signal is not performed in a resource grid corresponding to the delay-Doppler domain, and the first signal is a signal sent by the sending side to the receiving side.

Optionally, in a case that the target configuration information is indicated by the sending side to the receiving side through the first indication information, or in a case that the target configuration information is requested by the receiving side from the sending side and then indicated by the sending side to the receiving side based on the request through the first information, the target configuration information may include a time length of the interference measurement, a frame structure of the interference sending side, and a resource position of the second pilot in a delay-Doppler domain resource grid.

Specifically, the time length of the interference measurement, the frame structure of the interference sending side, and the resource position of the second pilot in the delay-Doppler domain resource grid may be determined after the sending side and the interference sending side interact with each other through a specific communication protocol. For example, when being both base stations, the sending side and the interference sending side can exchange the above information through the X2 interface, which may include the time length of the interference measurement, the frame structure of the interference sending side, and the resource position of the second pilot in the delay-Doppler domain resource grid.

Optionally, in a case that the resource position of the second pilot in the delay-Doppler domain resource grid is explicitly indicated, the sending side may not send the initial signal in the resource position of the second pilot in the delay-Doppler domain resource grid. To be specific, in the resource position of the second pilot in the delay-Doppler domain resource grid, transmission of a first signal is not performed, and the first signal is a signal sent by the sending side to the receiving side, to ensure that all the interference measured by the receiving side in the measurement range corresponding to the resource position of the second pilot in the delay-Doppler domain resource grid is directed at the interference sending side.

Optionally, the method further includes:

receiving, by the sending side, target configuration information sent by the receiving side; and
forwarding, by the sending side, the target configuration information to the interference sending side, where the target configuration information is used for instructing the interference sending side to configure the second pilot based on the target configuration information.

Optionally, in a case that the interference management process is triggered by the receiving side itself, the receiving side can directly determine the target configuration information by itself, for example, can directly determine the interference measurement area (IM detection area) by itself, that is, the position of the second pilot in the delay-Doppler domain resource grid can be used as a measurement area for interference measurement in the delay-Doppler domain resource grid.

Optionally, in a case that the interference management process is triggered by the receiving side itself, the receiving side can directly determine the target configuration information by itself, and on this basis, the receiving side needs to send the target configuration information determined by the receiving side itself to the sending side, and the sending side learns the target configuration information determined by the receiving side itself and then needs to further indicate the target configuration information to the interference sending side, so that the interference sending side determines the configuration of the second pilot, that is, configures the second pilot in the IM detection area for interference measurement, to ensure that the receiving side can accurately measure the second pilot within the resource range of the interference measurement.

Optionally, the method further includes:

sending, by the sending side, second indication information to the receiving side, where the second indication information is used for indicating that a measurement area is a resource grid range corresponding to the first pilot.

Optionally, as shown in FIG. 9, when the receiving side determines a measurement area in a resource grid range of the delay-Doppler domain corresponding to the first pilot, the measurement area of the interference pilot may be consistent with that of the original pilot. Actually, the interference channel and the communication channel may be different in delay and Doppler, which also needs to be considered during Gap configuration.

Optionally, in a case that the receiving side determines a measurement area in a resource grid range of the delay-Doppler domain corresponding to the first pilot, the interference measurement may be triggered by the receiving side itself or by the sending side.

Optionally, in a case that the receiving side determines a measurement area in a resource grid range of the delay-Doppler domain corresponding to the first pilot, the prior information about the pilot position of the interference sending side may be configured by the sending side to the receiving side. Theoretically, for a specific receiving side, it is assumed that the maximum delay and Doppler of the communication channel of the sending side can be $\tau_{max}^0$ and $v_{max}^0$ and the maximum delay and Doppler of the interference channel of the interference sending side can be $\tau_{max}^1$ and $v_{max}^1$ , and when $\tau_{max}^0 > \tau_{max}^1$ and $v_{max}^0 > v_{max}^1$ , the Gap required for interference channel measurement needs to be reconfigured. Actually, for the sending side, $\tau_{max}^0$ and $v_{max}^0$ can be fed back by the receiving side or obtained through uplink measurement using channel reciprocity; but the sending side has no way of knowing the prior information $\tau_{max}^1$ and $v_{max}^1$ of the channel between the sending side and the receiving side. Therefore, when determining the actually required Gap, the receiving side can determine the measurement area based on presetting, or determine the measurement area based on protocol pre-configuration, or determine the measurement area based on the second indication information of the sending side.

Optionally, the sending side can send second indication information to the receiving side, to indicating that the measurement area is a resource grid range corresponding to the first pilot to the receiving side; and the receiving side can determine, based on second indication information of the sending side, that the measurement area is the resource grid range corresponding to the first pilot.

Optionally, the sending side may directly send a 1-bit user-specific message to trigger interference management, instructing the receiving side to measure interference in the resource grid region of the first pilot.

Optionally, when the receiving side determines a measurement area in a resource grid range of the delay-Doppler domain corresponding to the first pilot, where the measurement area may be part of the resource grid range corresponding to the first pilot, the receiving side can determine a target position coordinate of the measurement area based on third indication information of the sending side.

For example, there are $J$ groups of optional values for the interference measurement area. It is assumed that the first pilot position is $(k_p, l_p)$, $(k_p, l_p)$ represents the coordinate of the pilot pulse on the delay-Doppler domain resource grid, $k_p$ corresponds to the Doppler dimension, and $l_p$ corresponds to the delay dimension. The area of Gap is $[k_p - 2k_v, k_p + 2k_v]$ and $[l_p - l_v, l_p + l_v]$ , $[k_p - 2k_v, k_p + 2k_v]$ represents the coordinate range in the Doppler dimension, and $[l_p - l_v, l_p$

+ $I_v$] represents the coordinate range in the delay dimension. Then, a set of optional values of the target position coordinate can be: $\boldsymbol{G} = \{[k_p - 2k_v - k_j, k_p + 2k_v + k_j], [l_p - l_v - l_j, l_p + l_v + l_j], j = 0,1,2,...,J - 1, k_0 = 0, l_0 = 0, k_j \geq 0, l_j \geq 0 \}$.

Optionally, the third indication information includes:

a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and

second direct indication information, where the second direct indication information is used for directly indicating the target position coordinate.

Optionally, the third indication information sent by the sending side may be a broadcast message such as PBCH in SSB or SIB message, or may be a user-specific message such as DCI or RRC message. These optional messages are used to configure the target position coordinate of the measurement area in the following manners:

(1) The target position coordinate of the measurement area (that is, the second direct indication information) is directly configured by using the user-specific message.

(2) The broadcast message are used to broadcast the J groups of optional values of the Gap area, and the user-specific message is used to send $\lceil \log_2 N \rceil$ bits to indicate a specific option (namely, the third index), where J is a positive integer.

Optionally, the sending side may directly send the target position coordinate of the measurement area to the receiving side through the third indication information.

Optionally, the third indication information may include second direct indication information, which is used to directly indicate the target position coordinate of the measurement area.

Optionally, the third indication information may include a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and

For example, the indication configuration information table may include fourth indexes: an "index 4", an "index 5", and an "index 6", where the position coordinate corresponding to "index 4" is "position coordinate D", the position coordinate corresponding to "index 5" is "position coordinate E", and the position coordinate corresponding to "index 6" is "position coordinate F". If the third index indicates "index 4", it can be determined that the target position coordinate of the measurement area includes the "position coordinate D" corresponding to the "index 4".

Optionally, the sending side may receive fourth indication information, where the fourth indication information is information indicating whether the target position coordinate is available on the receiving side.

Optionally, the receiving side may send 1-bit feedback information (fourth indication information), indicating whether the currently selected interference measurement area is appropriate (whether the target position coordinate is available). The sending side may reconfigure the Gap area according to the feedback message.

For example, assuming that the current configuration is $\{[k_p - 2k_v - k_j, k_p + 2k_v + k_j], [l_p - l_v - l_j, l_p + l_v + l_j]\}$, when the fourth indication information received by the sending side is 0, the configuration may become $\{[k_p - 2k_v - k_{j+1}, k_p + 2k_v + k_{j+1}], [l_p - l_v - l_{j+1}, l_p + l_v + l_{j+1}]\}$. When the received fourth indication information is 1, the configuration remains unchanged.

Optionally, in a case that the interference sending side uses the OFDM system, since the pilot mapping mode of the OFDM system is to hash and place a reference signal sequence on the TF domain resource grid according to a certain pattern, when the reference signal sequence is transformed into the DD domain through SFFT, the transformed reference signal sequence is distributed throughout the entire DD domain resource grid. If the reference signal and data in the TF domain are orthogonally multiplexed in the same subframe in this case, the reference signal and data transformed to the DD domain are non-orthogonally superimposed on a D-RE, which is not conducive to detection. Therefore, for the coexistence system of OTFS and OFDM, the interference measurement can be carried out in the time-frequency domain (TF domain).

Optionally, the sending side may send sixth indication information to the receiving side, and the receiving side determines the time frequency domain resource position corresponding to the second pilot based on the sixth indication information. For example, the sending side can configure an interference measurement subframe, which is a blank subframe, and no signal or data is sent on its resources, and the sending side can indicate the position of the interference measurement subframe in the radio frame by broadcasting or receiving-side dedicated signaling, to trigger the receiving-side measurement behavior. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain, and can achieve accurate measurement.

For example, the sending side can configure an interference measurement subframe, which is a subframe containing only the first pilot, and only the first pilot in the DD domain is sent on its resources; and the sending side can indicate the position of the interference measurement subframe in the radio frame by broadcasting or receiving-side dedicated signaling, to trigger the receiving-side measurement behavior. Then, the receiving side can convert the received signal sample points to the DD domain, and use the DD domain pilot detection method to obtain the DD domain channel, and then the component value of the received pilot on each RE in the TF domain is calculated, where the pilot components are subtracted from the received signal to obtain the neighboring cell interference signal and the noise part. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain.

For example, the sending side can configure an interference measurement subframe, which is a subframe containing the first pilot and data that are orthogonal on the DD domain resource; the sending side can indicate the position of the interference measurement subframe in the radio frame by broadcasting or receiving-side dedicated signaling, to trigger the receiving-side measurement behavior. Then, the receiving side can convert the received signal sample points to the DD domain, use the DD domain pilot detection method to obtain the DD domain channel, and use the estimated channel to demodulate the DD domain data symbols. Then, the component value of the received DD domain pilot data transformed into the TF domain on each RE can be calculated. The components are subtracted from the received signal to obtain the neighboring cell interference signal and the noise part. Then, the receiving side can obtain the position of the second pilot in the TF domain based on the sixth indication information. Then, the receiving side can perform neighboring cell interference channel measurement (measurement for the second pilot of the interference sending side) in the known pilot position in the TF domain.

In this embodiment of this application, the introduction of additional overheads can be avoided by configuring the interference measurement subframe.

Optionally, the sending side may send seventh indication information to the receiving side, and the seventh indication information is used for indicating a measurement range in a delay-Doppler domain resource grid corresponding to the interference measurement, where a delay-Doppler domain resource grid range corresponding to the interference measurement does not coincide with a resource grid range corresponding to the first pilot; and
the interference measurement may not be pilot-based interference channel estimation, and may only be used to estimate the neighboring cell interference power level.

Optionally, in a case that the receiving side, the sending side, and the interference sending side all use the OTFS system, or in a case that the receiving side and the sending side use the OTFS system and the interference sending side uses the OFDM system, the DD domain Gap resource used for the interference measurement on the receiving side does not need to overlap with the pilot on the interference sending side and its Gap resource. As shown in FIG. 11, a blank IM Gap can be added to the right of the Gap resource of the pilot required for communication. The IM Gap can be configured by the sending side, and the pilot position of the interference sending side does not need to be considered. The DD domain sample point set received by the receiving side is shown in FIG. 12, and the receiving side counts the average interference power at the sample points within the range of the bold box.

Specifically, when the topological positions of the transmitting/receiving node in the channel changes slowly, a more overhead-saving sending manner may be further used. To be specific, after the interference management process is triggered, the sending side sends no pilot in the IM stage, but still sends data. The original pilot area (pilot pulse + gap) can be reused as an IM detection area, and the interference sending side sends a pilot in this reused area, as shown in FIG. 11 and FIG. 12. In this case, the channel estimation of the current frame of the cell of the receiving side can be resolved in another manner: For example, the channel estimation of the previous frame is directly used if the channel of a plurality of consecutive frames remains unchanged, or channel prediction is performed if the channel of a plurality of consecutive frames changes regularly.

In addition, rate matching in the DD domain can be further performed for the IM Gap. When the number of information bits and the modulation order are given, the channel coding (LDPC, Polar, or the like) can be controlled to achieve the required code rate by adjusting the size of the IM Gap resource and changing the number of D-REs that actually carry data.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

The interference measurement method provided in this embodiment of this application may be executed by an interference measurement apparatus. In the embodiments of this application, an interference measurement apparatus provided in the embodiments of this application is described using an example in which an interference measurement apparatus executes the interference measurement method.

FIG. 17 is a schematic structural diagram 1 of an interference measurement apparatus according to an embodiment of this application. As shown in FIG. 17, the interference measurement device 1700 includes: a first receiving module 1710 and an interference measurement module 1720.

The first receiving module 1710 is configured to receive a signal, where the signal includes a second pilot sent by an interference sending side, and the interference sending side is an interference source when the receiving side performs receiving measurement on a first pilot of a sending side; and

the interference measurement module 1720 is configured to perform interference measurement on the interference sending side, where the interference measurement includes measurement of the second pilot, and both the receiving side and the sending side use an orthogonal time frequency space OTFS system.

Optionally, the interference measurement apparatus 1700 may receive a signal through the first receiving module 1710, where the signal includes a second pilot sent by an interference sending side, and the interference sending side is an interference source when the receiving side performs receiving measurement on a first pilot of a sending side; and then perform interference measurement on the interference sending side through the interference measurement module 1720, where the interference measurement includes measurement of the second pilot, and both the receiving side and the sending side use an orthogonal time frequency space OTFS system.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, the interference measurement module 1720 is specifically configured to:
perform interference measurement on the interference sending side in a delay-Doppler domain in a case that the interference sending side uses the OTFS system.

Optionally, the interference measurement module 1720 is specifically configured to:

determine target configuration information required for the interference measurement;
determine that the interference measurement is triggered; and
perform the interference measurement on the interference sending side in the delay-Doppler domain based on the target configuration information.

Optionally, the interference measurement module 1720 is specifically configured to:

receive, by the receiving side, first indication information sent by the sending side, where the first indication information is used for indicating the target configuration information; and
determine, by the receiving side, the target configuration information based on the first indication information.

Optionally, the interference measurement module 1720 is specifically configured to perform at least one of the following:

determine, by the receiving side after the receiving side receives the first indication information, that the interference measurement is triggered;
determine, by the receiving side in a case of determining that a signal-to-interference-plus-noise ratio SINR is greater than a first threshold, that the interference measurement is triggered, where the SINR is obtained based on the receiving measurement on the first pilot; and

determine, by the receiving side in a case of determining that a bit error rate of a receiver is greater than a second threshold, that the interference measurement is triggered.

Optionally, the interference measurement module 1720 is specifically configured to:

determine, by the receiving side, that the interference measurement is triggered; and
determine, by the receiving side, target configuration information required for the interference measurement;
perform, by the receiving side, the interference measurement on the interference sending side in the delay-Doppler domain based on the target configuration information.

Optionally, the interference measurement module 1720 is specifically configured to perform at least one of the following:

determine, by the receiving side in a case of determining that a signal-to-interference-plus-noise ratio SINR is greater than a first threshold, that the interference measurement is triggered, where the SINR is obtained based on the receiving measurement on the first pilot; and
determine, by the receiving side in a case of determining that a bit error rate of a receiver is greater than a second threshold, that the interference measurement is triggered.

Optionally, the interference measurement module 1720 is specifically configured to:

send, by the receiving side, interference measurement configuration request signaling to the sending side, where the interference measurement configuration request signaling is used for requesting the target configuration information;
receive, by the receiving side, first indication information sent by the sending side based on the interference measurement configuration request signaling, where the first indication information is used for indicating the target configuration information; and
determine, by the receiving side, the target configuration information based on the first indication information.

Optionally, the interference measurement configuration request signaling carries at least one of the following: uplink control information UCI, an uplink reference signal such as SRS, and an uplink MAC CE.
Optionally, the target configuration information includes a resource position of the second pilot in a delay-Doppler domain resource grid, and a resource range of the interference measurement.
Optionally, the target configuration information includes a time length of the interference measurement, a frame structure of the interference sending side, and a resource position of the second pilot in a delay-Doppler domain resource grid; and
transmission of a first signal is not performed in a measurement time, and the first signal is a signal sent by the sending side to the receiving side.
Optionally, the target configuration information includes a time length of the interference measurement, a frame structure of the interference sending side, and a resource position of the second pilot in a delay-Doppler domain resource grid; and
in the resource position of the second pilot in the delay-Doppler domain resource grid, transmission of a first signal is not performed in a resource grid corresponding to the delay-Doppler domain, and the first signal is a signal sent by the sending side to the receiving side.
Optionally, the first indication information is carried in at least one of the following:
an SSB, a PBCH, a SIB, DCI, RRC, and a MAC CE.
Optionally, the first indication information includes at least one of the following:

a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and
first direct indication information, where the first direct indication information is used for directly indicating the target configuration information.

Optionally, the interference measurement module 1720 is specifically configured to:
directly determine, by the receiving side, the target configuration information.

Optionally, the apparatus further includes:
a second sending module, configured to send the target configuration information to the sending side, where the target configuration information is used for instructing the interference sending side through the sending side to configure the second pilot based on the target configuration information.

Optionally, the interference measurement module 1720 is specifically configured to:

determine a measurement area of the interference measurement in the delay-Doppler domain resource grid based on the target configuration information; and
perform the interference measurement on the interference sending side in the measurement area.

Optionally, the interference measurement module 1720 is specifically configured to:

determine a resource position of the second pilot in the delay-Doppler domain resource grid based on the target configuration information; and
determine that the measurement area is the resource position of the second pilot in the delay-Doppler domain resource grid, where the resource position of the second pilot of the interference sending side in the delay-Doppler domain resource grid does not coincide with a resource grid range corresponding to the first pilot.

Optionally, the interference measurement module 1720 is specifically configured to:

determine a measurement area in a resource grid range of the delay-Doppler domain corresponding to the first pilot; and
perform the interference measurement on the interference sending side in the measurement area.

Optionally, the interference measurement module 1720 is specifically configured to:

determine, based on presetting, that the measurement area is the resource grid range corresponding to the first pilot;
determine, based on protocol pre-configuration, that the measurement area is the resource grid range corresponding to the first pilot; and
determine, based on second indication information of the sending side, that the measurement area is the resource grid range corresponding to the first pilot.

Optionally, the interference measurement module 1720 is specifically configured to:
determine, by the receiving side, a target position coordinate of the measurement area based on third indication information of the sending side.

Optionally, the third indication information includes:

a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and
second direct indication information, where the second direct indication information is used for directly indicating the target position coordinate.

Optionally, the apparatus further includes:
a third sending module, configured to send fourth indication information to the sending side, where the fourth indication information is used for indicating whether the target position coordinate is available.

Optionally, in a case that the interference sending side uses the OFDM system, the signal includes a first time unit used for indicating the interference measurement; and
the interference measurement module 1720 is specifically configured to:

determine, by the receiving side, a time frequency domain resource position corresponding to the second pilot; and
perform, by the receiving side, the interference measurement on the interference sending side based on the first time unit and the time frequency domain resource position corresponding to the second pilot.

Optionally, the first time unit is blank, or the first time unit includes the first pilot, or the first time unit includes the first pilot and transmission data; and
the interference measurement module 1720 is specifically configured to:

receive sixth indication information sent by the sending side, where the sixth indication information is used for indicating the time frequency domain resource position corresponding to the second pilot; and
determine the time frequency domain resource position corresponding to the second pilot based on the sixth indication information.

Optionally, the first time unit is blank, or the first time unit includes the first pilot, or the first time unit includes the first pilot and transmission data; and
the interference measurement module 1720 is specifically configured to:
perform blind detection, to determine the time frequency domain resource position corresponding to the second pilot.
Optionally, the interference measurement module 1720 is specifically configured to:
perform measurement on an interference channel based on the time frequency domain resource position corresponding to the second pilot.
Optionally, the interference measurement module 1720 is specifically configured to:

in a case that the first time unit includes the first pilot or in a case that the first time unit includes the first pilot and transmission data, transform the received signal to a delay-Doppler domain;
obtain a component value of the first pilot on each RE in a TF domain; and
subtract the component value of the first pilot from the received signal, to obtain an interference signal and noise part.

Optionally, the interference measurement module 1720 is specifically configured to:

receive seventh indication information sent by the sending side, where the seventh indication information is used for indicating a measurement range in a delay-Doppler domain resource grid corresponding to the interference measurement, where a delay-Doppler domain resource grid range corresponding to the interference measurement does not coincide with a resource grid range corresponding to the first pilot; and
determine an average interference power based on a receiving sampling point in the signal in the measurement range.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

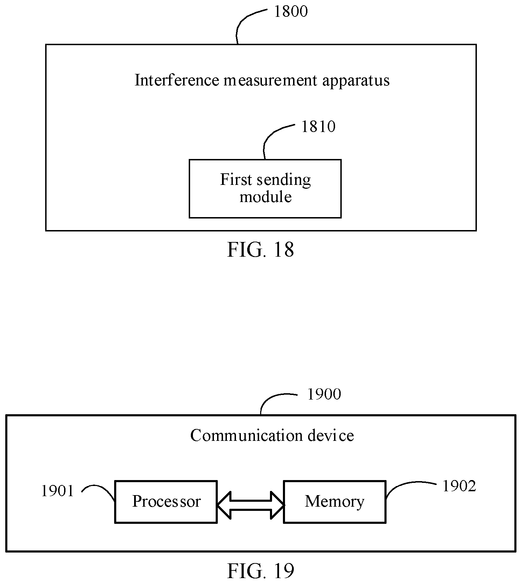

FIG. 18 is a schematic structural diagram 2 of an interference measurement apparatus according to an embodiment of this application. As shown in FIG. 18, the interference measurement device 1800 includes: a first sending module 1810.
The first sending module 1810 is configured to send an initial signal, where the initial signal is used by the receiving side to perform receiving measurement on a first pilot of the sending side;

a signal corresponding to the receiving measurement includes the initial signal and a second pilot sent by an interference sending side, the interference sending side is an interference source of the receiving measurement, and the second pilot is used by the receiving side to perform interference measurement on the interference sending side; and
both the receiving side and the sending side use an orthogonal time frequency space OTFS system.

Optionally, the interference measurement apparatus 1800 may send an initial signal through the first sending module 1810, where the initial signal is used by the receiving side to perform receiving measurement on a first pilot of the sending side; a signal corresponding to the receiving measurement includes the initial signal and a second pilot sent by an interference sending side, the interference sending side is an interference source of the receiving measurement, and the second pilot is used by the receiving side to perform interference measurement on the interference sending side; and both the receiving side and the sending side use an orthogonal time frequency space OTFS system.
In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, the apparatus further includes:
a fourth sending module, configured to send first indication information to the receiving side, where the first indication information is used for indicating target configuration information required for the interference measurement.

Optionally, the apparatus further includes:

> a second receiving module is configured to receive interference measurement configuration request signaling sent by the receiving side, where the interference measurement configuration request signaling is used for requesting the target configuration information; and
> a fifth sending module, configured to send first indication information based on the interference measurement configuration request signaling, where the first indication information is used for indicating the target configuration information.

Optionally, the target configuration information includes a resource position of the second pilot in a delay-Doppler domain resource grid, and a resource range of the interference measurement.

Optionally, the target configuration information includes a time length of the interference measurement, a frame structure of the interference sending side, and a resource position of the second pilot in a delay-Doppler domain resource grid; and
transmission of a first signal is not performed in a measurement time, and the first signal is a signal sent by the sending side to the receiving side.

Optionally, the target configuration information includes a time length of the interference measurement, a frame structure of the interference sending side, and a resource position of the second pilot in a delay-Doppler domain resource grid; and
in the resource position of the second pilot in the delay-Doppler domain resource grid, transmission of a first signal is not performed in a resource grid corresponding to the delay-Doppler domain, and the first signal is a signal sent by the sending side to the receiving side.

Optionally, the apparatus further includes:

> a third receiving module, configured to receive target configuration information sent by the receiving side; and
> a sixth sending module, configured to forward the target configuration information to the interference sending side, where the target configuration information is used for instructing the interference sending side to configure the second pilot based on the target configuration information.

Optionally, the apparatus further includes:
a seventh sending module, configured to send second indication information to the receiving side, where the second indication information is used for indicating that a measurement area is a resource grid range corresponding to the first pilot.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

The interference measurement apparatus in this embodiment of this application may be an electronic device such as an electronic device with an operating system, or may be a component in an electronic device such as an integrated circuit or a chip. The electronic device may be a terminal, or another device different from a terminal. For example, the terminal may include but is not limited to the foregoing listed types of the terminal 11, and the another device may be a server or a network attached storage (Network Attached Storage, NAS), which is not specifically limited in the embodiments of this application.

The interference measurement apparatus provided in this embodiment of this application can implement each process implemented in the method embodiments of FIG. 9 to FIG. 16, and achieve the same technical effect. To avoid repetition, details are not described herein again.

Optionally, FIG. 19 is a schematic structural diagram of a communication device according to an embodiment of this application. As shown in FIG. 19, an embodiment of this application further provides a communication device 1900, including a processor 1901 and a memory 1902, and a program or an instruction is stored in the memory 1902 and executable on the processor 1901. For example, when the communication device 1900 is a terminal, when the program or instruction is executed by the processor 1901, each step of the above interference measurement method embodiment can be achieved, and the same technical effect can be achieved. When the communication device 1900 is a network-side device, and when the program or instruction is executable by the processor 1901, steps of the embodiments of the foregoing interference measurement method are implemented, and the same technical effects can be achieved, which will not be described in detail herein again to avoid repetition.

An embodiment of this application further provides a receiving-side device, including: a processor and a communication interface.

the communication interface is configured to:

receive a signal, where the signal includes a second pilot sent by an interference sending side, and the interference sending side is an interference source when the receiving side performs receiving measurement on a first pilot of a sending side; and

the processor is configured to:

perform interference measurement on the interference sending side, where the interference measurement includes measurement of the second pilot, and
both the receiving side and the sending side use an orthogonal time frequency space OTFS system.

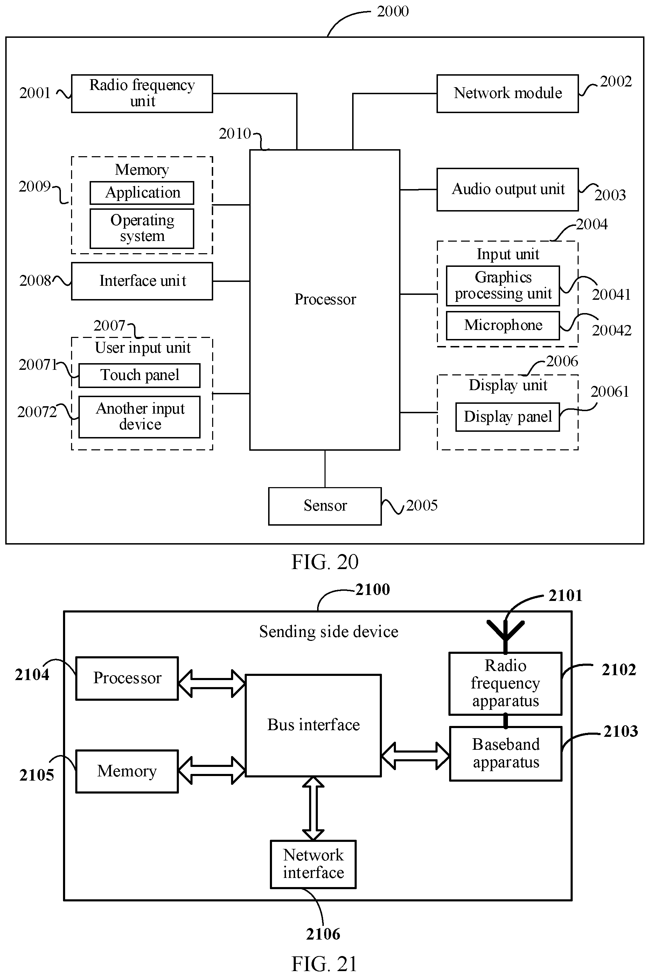

The receiving-side device embodiment corresponds to the foregoing method embodiment on the receiving side, and each implementation process and implementation of the foregoing method embodiment is applicable to the receiving-side device embodiment, and can achieve the same technical effect. Specifically, FIG. 20 is a schematic diagram of a hardware structure of a receiving-side device according to an embodiment of this application.

The receiving-side device 2000 includes, but is not limited to at least some components of a radio frequency unit 2001, a network module 2002, an audio output unit 2003, an input unit 2004, a sensor 2005, a display unit 2006, a user input unit 2007, an interface unit 2008, a memory 2009, a processor 2010, and the like.

A person skilled in the art may understand that, the receiving-side device 2000 may further include a power supply (for example, a battery) for supplying power to the components. The power supply may be logically connected to the processor 2010 by using a power management system, thereby implementing functions such as charging, discharging, and power consumption management by using the power management system. A receiving-side device structure shown in FIG. 20 does not constitute a limitation to the receiving-side device, and the receiving-side device may include more or fewer components than those shown in the figure, or some components may be combined, or a different component deployment may be used. Details are not described herein again.

It should be understood that, in this embodiment of this application, the input unit 2004 may include a graphics processing unit (Graphics Processing Unit, GPU) 20041 and a microphone 20042. The graphics processing unit 20041 performs processing on image data of a static picture or a video that is obtained by an image acquisition device (for example, a camera) in a video acquisition mode or an image acquisition mode. The display unit 2006 may include a display panel 20061, for example, a display panel 20061 configured in a form such as a liquid crystal display or an organic light-emitting diode. The user input unit 2007 includes at least one of a touch panel 20071 and another input device 20072. The touch panel 20071 is also referred to as a touchscreen The touch panel 20071 may include two parts: a touch detection apparatus and a touch controller. The another input device 20072 may include, but not limited to, a physical keyboard, a functional key (for example, a volume control key or a switch key), a track ball, a mouse, and a joystick, which are not described herein in detail.

In this embodiment of this application, after receiving downlink data from the network-side device, the radio frequency unit 2001 can transmit the downlink data to the processor 2010 for processing. In addition, the radio frequency unit 2001 can send uplink data to the network-side device. Generally, the radio frequency unit 2001 includes, but is not limited to, an antenna, an amplifier, a transceiver, a coupler, a low noise amplifier, a duplexer, and the like.

The memory 2009 may be configured to store a software program or instruction and various data. The memory 2009 may mainly include a first storage area for storing programs or instructions and a second storage area for storing data. The first storage area may store an operating system, an application or instruction required by at least one function (for example, a voice playing function or an image playing function), and the like. Additionally, the memory 2009 may include a volatile memory or a nonvolatile memory, or the memory 2009 may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. Volatile memories may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch link DRAM, SLDRAM), and a direct rambus dynamic random access memory (Direct Rambus RAM, DRRAM). The memory 2009 in this embodiment of this application includes but is not limited to these memories and any other suitable types of memories.

The processor 2010 may include one or more processing units. Optionally, the processor 2010 integrates an application processor and a modem processor. The application processor mainly processes operations related to an operating system, a user interface, an application, and the like. The modem processor mainly processes a wireless communication signal, and is, for example, a baseband processor. It may be understood that the foregoing modem processor may not be integrated into the processor 2010.

The radio frequency unit 2001 is configured to:

receive a signal, where the signal includes a second pilot sent by an interference sending side, and the interference sending side is an interference source when the receiving side performs receiving measurement on a first pilot of a sending side; and
the processor 2010 is configured to:

perform interference measurement on the interference sending side, where the interference measurement includes measurement of the second pilot, and
both the receiving side and the sending side use an orthogonal time frequency space OTFS system.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, in a case that the interference sending side uses the OTFS system, the processor 2010 is configured to:

perform interference measurement on the interference sending side in a delay-Doppler domain.

Optionally, the processor 2010 is configured to:

determine target configuration information required for the interference measurement;
determine that the interference measurement is triggered; and
perform the interference measurement on the interference sending side in the delay-Doppler domain based on the target configuration information.

Optionally, the processor 2010 is configured to:

receive first indication information sent by the sending side, where the first indication information is used for indicating the target configuration information; and
determine the target configuration information based on the first indication information.

Optionally, the processor 2010 is configured to perform at least one of the following:

determine, after the receiving side receives the first indication information, that the interference measurement is triggered;
determine, in a case of determining that a signal-to-interference-plus-noise ratio SINR is greater than a first threshold, that the interference measurement is triggered, where the SINR is obtained based on the receiving measurement on the first pilot; and
determine, in a case of determining that a bit error rate of a receiver is greater than a second threshold, that the interference measurement is triggered.

Optionally, the processor 2010 is configured to:

determine that the interference measurement is triggered; and
determine target configuration information required for the interference measurement;
perform the interference measurement on the interference sending side in the delay-Doppler domain based on the target configuration information.

Optionally, the processor 2010 is configured to perform at least one of the following:

determine, in a case of determining that a signal-to-interference-plus-noise ratio SINR is greater than a first threshold, that the interference measurement is triggered, where the SINR is obtained based on the receiving measurement on the first pilot; and

determine, by the receiving side in a case of determining that a bit error rate of a receiver is greater than a second threshold, that the interference measurement is triggered.

Optionally, the processor 2010 is configured to:

send interference measurement configuration request signaling to the sending side, where the interference measurement configuration request signaling is used for requesting the target configuration information;

receive first indication information sent by the sending side based on the interference measurement configuration request signaling, where the first indication information is used for indicating the target configuration information; and

determine, by the receiving side, the target configuration information based on the first indication information.

Optionally, the interference measurement configuration request signaling carries at least one of the following: uplink control information UCI, an uplink reference signal such as SRS, and an uplink MAC CE.

Optionally, the target configuration information includes a resource position of the second pilot in a delay-Doppler domain resource grid, and a resource range of the interference measurement.

Optionally, the target configuration information includes a time length of the interference measurement, a frame structure of the interference sending side, and a resource position of the second pilot in a delay-Doppler domain resource grid; and

transmission of a first signal is not performed in a measurement time, and the first signal is a signal sent by the sending side to the receiving side.

Optionally, the target configuration information includes a time length of the interference measurement, a frame structure of the interference sending side, and a resource position of the second pilot in a delay-Doppler domain resource grid; and

in the resource position of the second pilot in the delay-Doppler domain resource grid, transmission of a first signal is not performed in a resource grid corresponding to the delay-Doppler domain, and the first signal is a signal sent by the sending side to the receiving side.

Optionally, the first indication information is carried in at least one of the following:

an SSB, a PBCH, a SIB, DCI, RRC, and a MAC CE.

Optionally, the first indication information includes at least one of the following:

a first index, where the first index is used for indicating the target configuration information that corresponds to the first index and that is in a configuration information table, where the configuration information table includes at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and

first direct indication information, where the first direct indication information is used for directly indicating the target configuration information.

Optionally, the processor 2010 is configured to:

directly determine the target configuration information.

Optionally, the processor 2010 is configured to:

send the target configuration information to the sending side, where the target configuration information is used for instructing the interference sending side through the sending side to configure the second pilot based on the target configuration information.

Optionally, the processor 2010 is configured to:

determine a measurement area of the interference measurement in the delay-Doppler domain resource grid based on the target configuration information; and

perform the interference measurement on the interference sending side in the measurement area.

Optionally, the processor 2010 is configured to:

determine a resource position of the second pilot in the delay-Doppler domain resource grid based on the target configuration information; and

determine that the measurement area is the resource position of the second pilot in the delay-Doppler domain resource grid, where the resource position of the second pilot of the interference sending side in the delay-Doppler domain resource grid does not coincide with a resource grid range corresponding to the first pilot.

Optionally, the processor 2010 is configured to:

determine a measurement area in a resource grid range of the delay-Doppler domain corresponding to the first pilot; and
perform the interference measurement on the interference sending side in the measurement area.

Optionally, the processor 2010 is configured to:

determine, based on presetting, that the measurement area is the resource grid range corresponding to the first pilot;
determine, based on protocol pre-configuration, that the measurement area is the resource grid range corresponding to the first pilot; and
determine, based on second indication information of the sending side, that the measurement area is the resource grid range corresponding to the first pilot.

Optionally, the processor 2010 is configured to:
determine, by the receiving side, a target position coordinate of the measurement area based on third indication information of the sending side.
Optionally, the third indication information includes:

a third index, where the third index is used for indicating the target position coordinate that corresponds to the second index and that is in at least one position coordinate set, where the at least one position coordinate set includes at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and
second direct indication information, where the second direct indication information is used for directly indicating the target position coordinate.

Optionally, the processor 2010 is configured to:
send fourth indication information to the sending side, where the fourth indication information is used for indicating whether the target position coordinate is available.
Optionally, in a case that the interference sending side uses the OFDM system, the signal includes a first time unit used for indicating the interference measurement; and
the processor 2010 is configured to:

determine, by the receiving side, a time frequency domain resource position corresponding to the second pilot; and
performing, by the receiving side, the interference measurement on the interference sending side based on the first time unit and the time frequency domain resource position corresponding to the second pilot.

Optionally, the first time unit is blank, or the first time unit includes the first pilot, or the first time unit includes the first pilot and transmission data; and
the processor 2010 is configured to:

receive sixth indication information sent by the sending side, where the sixth indication information is used for indicating the time frequency domain resource position corresponding to the second pilot; and
determine the time frequency domain resource position corresponding to the second pilot based on the sixth indication information.

Optionally, the first time unit is blank, or the first time unit includes the first pilot, or the first time unit includes the first pilot and transmission data; and
the processor 2010 is configured to:
perform blind detection, to determine the time frequency domain resource position corresponding to the second pilot.
Optionally, the processor 2010 is configured to:
perform measurement on an interference channel based on the time frequency domain resource position corresponding to the second pilot.
Optionally, in a case that the first time unit includes the first pilot or in a case that the first time unit includes the first pilot and transmission data, the processor 2010 is configured to:

transform, by the receiving side, the received signal to a delay-Doppler domain;

obtain, by the receiving side, a component value of the first pilot on each RE in a TF domain; and

subtract the component value of the first pilot from the received signal, to obtain an interference signal and noise part.

Optionally, the processor 2010 is configured to:

receive, by the receiving side, seventh indication information sent by the sending side, where the seventh indication information is used for indicating a measurement range in a delay-Doppler domain resource grid corresponding to the interference measurement, where a delay-Doppler domain resource grid range corresponding to the interference measurement does not coincide with a resource grid range corresponding to the first pilot; and

determine, by the receiving side, an average interference power based on a receiving sampling point in the signal in the measurement range.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

An embodiment of this application further provides a sending-side device, including: a processor and a communication interface. The communication interface is configured to:

send an initial signal, where the initial signal is used by the receiving side to perform receiving measurement on a first pilot of the sending side;

a signal corresponding to the receiving measurement includes the initial signal and a second pilot sent by an interference sending side, the interference sending side is an interference source of the receiving measurement, and the second pilot is used by the receiving side to perform interference measurement on the interference sending side; and

both the receiving side and the sending side use an orthogonal time frequency space OTFS system.

The sending-side device embodiment corresponds to the foregoing method embodiment on the sending-side device, and each implementation process and implementation of the foregoing method embodiment is applicable to the sending-side device embodiment, and can achieve the same technical effect.

Specifically, an embodiment of this application further provides a sending-side device. FIG. 21 is a schematic diagram of a hardware structure of a sending-side device according to an embodiment of this application. As shown in FIG. 21, the sending-side device 2100 includes: an antenna 2101, a radio frequency apparatus 2102, a baseband apparatus 2103, a processor 2104, and a memory 2105. The antenna 2101 is connected to the radio frequency apparatus 2102. In an uplink direction, the radio frequency apparatus 2102 receives information by using the antenna 2101, and sends the received information to the baseband apparatus 2103 for processing. In a downlink direction, the baseband apparatus 2103 processes information to be sent, and sends the information to the radio frequency apparatus 2102. The radio frequency apparatus 2102 processes the received information and sends the information by using the antenna 2101.

The method performed by the sending-side device in the foregoing embodiments may be implemented in the baseband apparatus 2103. The baseband apparatus 2103 includes a baseband processor.

The baseband apparatus 2103 may include, for example, at least one baseband plate. A plurality of chips are disposed on the baseband plate. As shown in FIG. 21, one of the plurality of chips is, for example, the baseband processor, and is connected to the memory 2105 through a user interface, to invoke a program in the memory 2105 to perform operations of the network device in the foregoing method embodiments.

The sending-side device may further include a network interface 2106. The interface is, for example, a common public radio interface (common public radio interface, CPRI).

Specifically, the sending-side device 2100 in this embodiment of this application further includes: an instruction or a program stored in the memory 2105 and executable on the processor 2104. The processor 2104 invokes the instruction or program in the memory 2105 to perform the method performed by the modules shown in FIG. 18, and achieve the same technical effect. To avoid repetition, details are not described herein again.

Optionally, the radio frequency apparatus 2102 is configured to:

send an initial signal, where the initial signal is used by the receiving side to perform receiving measurement on a first pilot of the sending side;

a signal corresponding to the receiving measurement includes the initial signal and a second pilot sent by an interference sending side, the interference sending side is an interference source of the receiving measurement, and the second pilot is used by the receiving side to perform interference measurement on the interference sending side; and

both the receiving side and the sending side use an orthogonal time frequency space OTFS system.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

Optionally, the radio frequency apparatus 2102 is further configured to:

send first indication information to the receiving side, where the first indication information is used for indicating target configuration information required for the interference measurement.

Optionally, the radio frequency apparatus 2102 is further configured to:

receive interference measurement configuration request signaling sent by the receiving side, where the interference measurement configuration request signaling is used for requesting the target configuration information; and send, by the sending side, first indication information based on the interference measurement configuration request signaling, where the first indication information is used for indicating the target configuration information.

Optionally, the target configuration information includes a resource position of the second pilot in a delay-Doppler domain resource grid, and a resource range of the interference measurement.

Optionally, the target configuration information includes a time length of the interference measurement, a frame structure of the interference sending side, and a resource position of the second pilot in a delay-Doppler domain resource grid; and

transmission of a first signal is not performed in a measurement time, and the first signal is a signal sent by the sending side to the receiving side.

Optionally, the target configuration information includes a time length of the interference measurement, a frame structure of the interference sending side, and a resource position of the second pilot in a delay-Doppler domain resource grid; and

in the resource position of the second pilot in the delay-Doppler domain resource grid, transmission of a first signal is not performed in a resource grid corresponding to the delay-Doppler domain, and the first signal is a signal sent by the sending side to the receiving side.

Optionally, the radio frequency apparatus 2102 is further configured to: receive target configuration information sent by the receiving side; and

forward the target configuration information to the interference sending side, where the target configuration information is used for instructing the interference sending side to configure the second pilot based on the target configuration information.

Optionally, the radio frequency apparatus 2102 is further configured to: send second indication information to the receiving side, where the second indication information is used for indicating that a measurement area is a resource grid range corresponding to the first pilot.

In the embodiments of this application, performing interference measurement on the second pilot of the interference sending side based on signal transmission of the receiving side and the sending side using the orthogonal time frequency space OTFS system, and implementing interference measurement on the second pilot when the first pilot is transmitted in the OTFS system are applicable to interference measurement on various reference signals, to effectively save resources.

An embodiment of this application further provides a readable storage medium. The readable storage medium stores a program or instructions, and when the program or the instructions are executed by a processor, the processes of the foregoing interference measurement method embodiment are implemented, and the same technical effects can be achieved. To avoid repetition, details are not described herein again.

The processor is a processor in the receiving-side device described in the foregoing embodiments. The readable storage medium includes a computer-readable storage medium, for example, a computer read-only memory ROM, a random access memory RAM, a magnetic disk, an optical disc, or the like.

An embodiment of this application further provides a chip. The chip includes a processor and a communication interface. The communication interface is coupled to the processor. The processor is configured to run a program or instructions to implement all embodiments of the interference measurement method described above, and the same technical effects can be achieved, which will not be described in detail herein again to avoid repetition.

It should be noted that, the chip mentioned in the embodiments of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing interference measurement method embodiment, and can achieve the same technical effects. To avoid repetition, details are not described herein again.

An embodiment of this application further provides an interference measurement system, including: a receiving-side device and a sending-side device, the receiving-side device can be configured to perform the embodiments of the above-mentioned interference measurement methods, and the sending-side device can be configured to perform the embodiments of the above-mentioned interference measurement method.

It should be noted that the terms "include", "include", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be noted that the range of the method and apparatus in the implementations of this application is not limited to performing functions in the shown or discussed order, and may further include performing functions in a basically simultaneous manner or in reverse order according to the involved functions. For example, the described method may be performed in an order different from the described order, and steps may be further added, omitted, or combined. In addition, features described with reference to some examples may be combined in other examples.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions of this application essentially or the part contributing to the conventional technology may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. An interference measurement method, comprising:

   receiving, by a receiving side, a signal, wherein the signal comprises a second pilot sent by an interference sending side, and the interference sending side is an interference source when the receiving side performs receiving measurement on a first pilot of a sending side; and
   performing, by the receiving side, interference measurement on the interference sending side, wherein the interference measurement comprises measurement of the second pilot, and
   both the receiving side and the sending side use an orthogonal time frequency space OTFS system.

2. The interference measurement method according to claim 1, wherein in a case that the interference sending side uses the OTFS system, the performing, by the receiving side, interference measurement on the interference sending side comprises:
   performing, by the receiving side, interference measurement on the interference sending side in a delay-Doppler domain.

3. The interference measurement method according to claim 2, wherein the performing, by the receiving side, interference measurement on the interference sending side in a delay-Doppler domain comprises:

   determining, by the receiving side, target configuration information required for the interference measurement;
   determining, by the receiving side, that the interference measurement is triggered; and
   performing, by the receiving side, the interference measurement on the interference sending side in the delay-Doppler domain based on the target configuration information.

4. The interference measurement method according to claim 3, wherein the determining, by the receiving side, target configuration information required for the interference measurement comprises:

  receiving, by the receiving side, first indication information sent by the sending side, wherein the first indication information is used for indicating the target configuration information; and
  determining, by the receiving side, the target configuration information based on the first indication information.

5. The interference measurement method according to claim 4, wherein the determining, by the receiving side, that the interference measurement is triggered comprises at least one of the following:

  determining, by the receiving side after the receiving side receives the first indication information, that the interference measurement is triggered;
  determining, by the receiving side in a case of determining that a signal-to-interference-plus-noise ratio SINR is greater than a first threshold, that the interference measurement is triggered, wherein the SINR is obtained based on the receiving measurement on the first pilot; and
  determining, by the receiving side in a case of determining that a bit error rate of a receiver is greater than a second threshold, that the interference measurement is triggered.

6. The interference measurement method according to claim 2, wherein the performing, by the receiving side, interference measurement on the interference sending side in a delay-Doppler domain comprises:

  determining, by the receiving side, that the interference measurement is triggered; and
  determining, by the receiving side, target configuration information required for the interference measurement;
  performing, by the receiving side, the interference measurement on the interference sending side in the delay-Doppler domain based on the target configuration information.

7. The interference measurement method according to claim 6, wherein the determining, by the receiving side, that the interference measurement is triggered comprises at least one of the following:

  determining, by the receiving side in a case of determining that a signal-to-interference-plus-noise ratio SINR is greater than a first threshold, that the interference measurement is triggered, wherein the SINR is obtained based on the receiving measurement on the first pilot; and
  determining, by the receiving side in a case of determining that a bit error rate of a receiver is greater than a second threshold, that the interference measurement is triggered.

8. The interference measurement method according to claim 6 or 7, wherein the determining, by the receiving side, target configuration information required for the interference measurement comprises:

  sending, by the receiving side, interference measurement configuration request signaling to the sending side, wherein the interference measurement configuration request signaling is used for requesting the target configuration information;
  receiving, by the receiving side, first indication information sent by the sending side based on the interference measurement configuration request signaling, wherein the first indication information is used for indicating the target configuration information; and
  determining, by the receiving side, the target configuration information based on the first indication information.

9. The interference measurement method according to claim 8, wherein the interference measurement configuration request signaling carries at least one of the following:
  uplink control information UCI, an uplink reference signal SRS, and an uplink MAC CE.

10. The interference measurement method according to claim 4 or 8, wherein the target configuration information comprises a resource position of the second pilot in a delay-Doppler domain resource grid, and a resource range of the interference measurement.

11. The interference measurement method according to claim 4 or 8, wherein the target configuration information comprises a time length of the interference measurement, a frame structure of the interference sending side, and a resource position of the second pilot in a delay-Doppler domain resource grid; and
  transmission of a first signal is not performed in a measurement time, and the first signal is a signal sent by the sending side to the receiving side.

12. The interference measurement method according to claim 4 or 8, wherein the target configuration information comprises a time length of the interference measurement, a frame structure of the interference sending side, and a resource position of the second pilot in a delay-Doppler domain resource grid; and
in the resource position of the second pilot in the delay-Doppler domain resource grid, transmission of a first signal is not performed in a resource grid corresponding to the delay-Doppler domain, and the first signal is a signal sent by the sending side to the receiving side.

13. The interference measurement method according to any one of claims 10 to 12, wherein the first indication information is carried in at least one of the following:
a synchronization signal block SSB, a physical broadcast channel PBCH, a system information block SIB, downlink control information DCI, radio resource control RRC, and a medium access control control element MAC CE.

14. The interference measurement method according to any one of claims 10 to 12, wherein the first indication information comprises at least one of the following:

a first index, wherein the first index is used for indicating the target configuration information that corresponds to the first index and that is in a configuration information table, wherein the configuration information table comprises at least one second index and at least one piece of configuration information, one second index corresponds to one piece of configuration information, and different second indexes correspond to different pieces of configuration information; and the first index is one of the at least one second index, and the target configuration information is one of the at least one piece of configuration information; and
first direct indication information, wherein the first direct indication information is used for directly indicating the target configuration information.

15. The interference measurement method according to claim 6 or 7, wherein the determining, by the receiving side, target configuration information required for the interference measurement comprises:
directly determining, by the receiving side, the target configuration information.

16. The interference measurement method according to claim 15, wherein the method further comprises:
sending, by the receiving side, the target configuration information to the sending side, wherein the target configuration information is used for instructing the interference sending side through the sending side to configure the second pilot based on the target configuration information.

17. The interference measurement method according to any one of claims 3 to 16, wherein the performing, by the receiving side, interference measurement on the interference sending side in a delay-Doppler domain comprises:

determining, by the receiving side, a measurement area of the interference measurement in a delay-Doppler domain resource grid based on the target configuration information; and
performing, by the receiving side, the interference measurement on the interference sending side in the measurement area.

18. The interference measurement method according to claim 17, wherein the determining, by the receiving side, a measurement area of the interference measurement in a delay-Doppler domain resource grid based on the target configuration information comprises:

determining, by the receiving side, a resource position of the second pilot in the delay-Doppler domain resource grid based on the target configuration information; and
determining, by the receiving side, that the measurement area is the resource position of the second pilot in the delay-Doppler domain resource grid, wherein the resource position of the second pilot of the interference sending side in the delay-Doppler domain resource grid does not coincide with a resource grid range corresponding to the first pilot.

19. The interference measurement method according to claim 2, wherein the performing, by the receiving side, interference measurement on the interference sending side in a delay-Doppler domain comprises:

determining, by the receiving side, a measurement area in a resource grid range of a delay-Doppler domain corresponding to the first pilot; and
performing, by the receiving side, the interference measurement on the interference sending side in the measurement area.

20. The interference measurement method according to claim 19, wherein the determining, by the receiving side, a measurement area in a resource grid range of a delay-Doppler domain corresponding to the first pilot comprises:

determining, by the receiving side based on presetting, that the measurement area is the resource grid range corresponding to the first pilot;
determining, by the receiving side based on protocol pre-configuration, that the measurement area is the resource grid range corresponding to the first pilot; and
determining, by the receiving side based on second indication information of the sending side, that the measurement area is the resource grid range corresponding to the first pilot.

21. The interference measurement method according to claim 19, wherein the determining, by the receiving side, a measurement area in a resource grid range of a delay-Doppler domain corresponding to the first pilot comprises:
determining, by the receiving side, a target position coordinate of the measurement area based on third indication information of the sending side.

22. The interference measurement method according to claim 21, wherein the third indication information comprises:

a third index, wherein the third index is used for indicating the target position coordinate that corresponds to the second index and that is in at least one position coordinate set, wherein the at least one position coordinate set comprises at least one fourth index and at least one position coordinate, one fourth index corresponds to one position coordinate, and different fourth indexes correspond to different position coordinates; and the third index is one of the at least one fourth index, and the target position coordinate is one of the at least one position coordinate; and
second direct indication information, wherein the second direct indication information is used for directly indicating the target position coordinate.

23. The interference measurement method according to claim 22, wherein the method further comprises:
sending, by the receiving side, fourth indication information to the sending side, wherein the fourth indication information is used for indicating whether the target position coordinate is available.

24. The interference measurement method according to claim 1, wherein in a case that the interference sending side uses the OFDM system, the signal comprises a first time unit used for indicating the interference measurement; and the performing, by the receiving side, interference measurement on the interference sending side comprises:

determining, by the receiving side, a time frequency domain resource position corresponding to the second pilot; and
performing, by the receiving side, the interference measurement on the interference sending side based on the first time unit and the time frequency domain resource position corresponding to the second pilot.

25. The interference measurement method according to claim 24, wherein the first time unit is blank, or the first time unit comprises the first pilot, or the first time unit comprises the first pilot and transmission data; and the determining, by the receiving side, a time frequency domain resource position corresponding to the second pilot comprises:

receiving, by the receiving side, sixth indication information sent by the sending side, wherein the sixth indication information is used for indicating the time frequency domain resource position corresponding to the second pilot; and
determining, by the receiving side, the time frequency domain resource position corresponding to the second pilot based on the sixth indication information.

26. The interference measurement method according to claim 24, wherein the first time unit is blank, or the first time unit comprises the first pilot, or the first time unit comprises the first pilot and transmission data; and the determining, by the receiving side, a time frequency domain resource position corresponding to the second pilot of the interference sending side comprises:

performing, by the receiving side, blind detection, to determine the time frequency domain resource position corresponding to the second pilot.

27. The interference measurement method according to claim 25 or 26, wherein the performing interference measurement on the interference sending side comprises:
performing, by the receiving side, measurement on an interference channel based on the time frequency domain resource position corresponding to the second pilot.

28. The interference measurement method according to claim 25 or 26, wherein in a case that the first time unit comprises the first pilot or in a case that the first time unit comprises the first pilot and the transmission data, the performing interference measurement on the interference sending side further comprises:

transforming, by the receiving side, a received signal to a delay-Doppler domain;
obtaining, by the receiving side, a component value of the first pilot on each resource element RE in a time frequency domain; and
subtracting the component value of the first pilot from the received signal, to obtain an interference signal and noise part.

29. The interference measurement method according to claim 1, wherein the performing, by the receiving side, interference measurement on the interference sending side comprises:

receiving, by the receiving side, seventh indication information sent by the sending side, wherein the seventh indication information is used for indicating a measurement range in a delay-Doppler domain resource grid corresponding to the interference measurement, wherein a delay-Doppler domain resource grid range corresponding to the interference measurement does not coincide with a resource grid range corresponding to the first pilot; and
determining, by the receiving side, an average interference power based on a receiving sampling point in the signal in the measurement range.

30. An interference measurement method, comprising:

sending, by a sending side, an initial signal, wherein the initial signal is used by the receiving side to perform receiving measurement on a first pilot of the sending side;
a signal corresponding to the receiving measurement comprises the initial signal and a second pilot sent by an interference sending side, the interference sending side is an interference source of the receiving measurement, and the second pilot is used by the receiving side to perform interference measurement on the interference sending side; and
both the receiving side and the sending side use an orthogonal time frequency space OTFS system.

31. The interference measurement method according to claim 30, wherein the method further comprises:
sending, by the sending side, first indication information to the receiving side, wherein the first indication information is used for indicating target configuration information required for the interference measurement.

32. The interference measurement method according to claim 30, wherein the method further comprises:

receiving interference measurement configuration request signaling sent by the receiving side, wherein the interference measurement configuration request signaling is used for requesting the target configuration information; and
sending, by the sending side, first indication information based on the interference measurement configuration request signaling, wherein the first indication information is used for indicating the target configuration information.

33. The interference measurement method according to claim 31 or 32, wherein the target configuration information comprises a resource position of the second pilot in a delay-Doppler domain resource grid, and a resource range of the interference measurement.

34. The interference measurement method according to claim 31 or 32, wherein the target configuration information comprises a time length of the interference measurement, a frame structure of the interference sending side, and a resource position of the second pilot in a delay-Doppler domain resource grid; and

transmission of a first signal is not performed in a measurement time, and the first signal is a signal sent by the sending side to the receiving side.

35. The interference measurement method according to claim 31 or 32, wherein the target configuration information comprises a time length of the interference measurement, a frame structure of the interference sending side, and a resource position of the second pilot in a delay-Doppler domain resource grid; and

in the resource position of the second pilot in the delay-Doppler domain resource grid, transmission of a first signal is not performed in a resource grid corresponding to the delay-Doppler domain, and the first signal is a signal sent by the sending side to the receiving side.

36. The interference measurement method according to claim 30, wherein the method further comprises:

receiving, by the sending side, target configuration information sent by the receiving side; and

forwarding, by the sending side, the target configuration information to the interference sending side, wherein the target configuration information is used for instructing the interference sending side to configure the second pilot based on the target configuration information.

37. The interference measurement method according to claim 30, wherein the method further comprises:

sending, by the sending side, second indication information to the receiving side, wherein the second indication information is used for indicating that a measurement area is a resource grid range corresponding to the first pilot.

38. An interference measurement apparatus, comprising:

a first receiving module, configured to receive a signal, wherein the signal comprises a second pilot sent by an interference sending side, and the interference sending side is an interference source when the receiving side performs receiving measurement on a first pilot of a sending side; and

an interference measurement module, configured to perform interference measurement on the interference sending side, wherein the interference measurement comprises measurement of the second pilot, and

both the receiving side and the sending side use an orthogonal time frequency space OTFS system.

39. An interference measurement apparatus, comprising:

a first sending module, configured to send an initial signal, wherein the initial signal is used by the receiving side to perform receiving measurement on a first pilot of the sending side;

a signal corresponding to the receiving measurement comprises the initial signal and a second pilot sent by an interference sending side, the interference sending side is an interference source of the receiving measurement, and the second pilot is used by the receiving side to perform interference measurement on the interference sending side; and

both the receiving side and the sending side use an orthogonal time frequency space OTFS system.

40. A receiving-side device, comprising a processor and a memory, wherein a program or instructions are stored in the memory and executable on the processor, and when the program or the instructions are executed by the processor, steps of the interference measurement method according to any one of claims 1 to 29 are implemented.

41. A sending-side device, comprising a processor and a memory, wherein a program or instructions are stored in the memory and executable on the processor, and when the program or the instructions are executed by the processor, steps of the interference measurement method according to any one of claims 30 to 37 are implemented.

42. A readable storage medium, storing a program or instructions, wherein when the program or the instructions are executed by a processor, steps of the interference measurement method according to any one of claims 1 to 29 are implemented or steps of the interference measurement method according to any one of claims 30 to 37 are implemented.

FIG. 1

FIG. 2

Time domain impulse response

Time frequency
response
(OFDM)

Delay-Doppler
response
(OTFS)

Doppler-variant response
(OTFS)

FIG. 3

FIG. 4

FIG. 5

FIG. 6

Front-load demodulation reference signal (Front-Load DMRS)

Additional demodulation reference signal (Additional DMRS)

Physical downlink control channel (PDCCH)

Physical downlink shared channel (PDSCH)

Physical downlink control channel demodulation reference signal (PDCCH-DMRS)

Channel state information reference signal (CSI-RS)

Physical downlink shared channel demodulation reference signal (PDSCH-DMRS)

Tracking reference signal (TRS)

Phase tracking reference signal (PT-RS)

Symbol

FIG. 7

FIG. 8

A receiving side receives a signal, where the signal includes a second pilot sent by an interference sending side, and the interference sending side is an interference source when the receiving side performs receiving measurement on a first pilot of a sending side

910

The receiving side performs interference measurement on the interference sending side, where the interference measurement includes measurement of the second pilot

920

FIG. 9

## W/O IM-Gap

Data symbol

Interference measurement area (Gap)

First pilot symbol

FIG. 10

## W/ IM-Gap

☐ Data symbol

☐ Interference measurement area (Gap)

☐ First pilot symbol

FIG. 11

☐ Data detection

☒ Channel estimation

FIG. 12

Data detection

Interference measurement

Channel estimation

FIG. 13

Data symbol

Interference measurement area (Gap)

Interference measurement pilot symbol

FIG. 14

Data detection

Interference
measurement

FIG. 15

A sending side sends an initial signal, where the initial signal is used by
the receiving side to perform receiving measurement on a first pilot of
the sending side

1600

FIG. 16

1700

Interference measurement apparatus

1710

First receiving
module

1720

Interference
measurement
module

FIG. 17

1800

Interference measurement apparatus

1810

First sending
module

FIG. 18

1900

Communication device

1901    Processor   ⟺   Memory    1902

FIG. 19

2000

Radio frequency unit — 2001

Network module — 2002

Memory — 2009
Application
Operating system

Interface unit — 2008

User input unit — 2007
Touch panel — 20071
Another input device — 20072

Processor — 2010

Audio output unit — 2003

Input unit — 2004
Graphics processing unit — 20041
Microphone — 20042

Display unit — 2006
Display panel — 20061

Sensor — 2005

FIG. 20

Sending side device — 2100

2101

Processor — 2104

Memory — 2105

Bus interface

Radio frequency apparatus — 2102

Baseband apparatus — 2103

Network interface

2106

FIG. 21

## INTERNATIONAL SEARCH REPORT

| International application No. |
| --- |
| **PCT/CN2022/138316** |

**A. CLASSIFICATION OF SUBJECT MATTER**

H04B 17/345(2015.01)i

According to International Patent Classification (IPC) or to both national classification and IPC

**B. FIELDS SEARCHED**

Minimum documentation searched (classification system followed by classification symbols)

IPC: H04B H04W

Documentation searched other than minimum documentation to the extent that such documents are included in the fields searched

Electronic data base consulted during the international search (name of data base and, where practicable, search terms used)

CNTXT; CNKI; WPABSC; ENTXTC; ENTXT; 3GPP: 干扰, 测量, 导频, 正交时频空域, 延迟, 多普勒, 信干噪比, 误码率, interference, measurement, pilot, OTFS, delay, doppler, SINR

**C. DOCUMENTS CONSIDERED TO BE RELEVANT**

| Category* | Citation of document, with indication, where appropriate, of the relevant passages | Relevant to claim No. |
| --- | --- | --- |
| Y | CN 107370584 A (ZTE CORP.) 21 November 2017 (2017-11-21) description, paragraphs 246-262 | 1, 2, 30-32, 38-42 |
| Y | CN 112737745 A (VOLKSWAGEN AKTIENGESELLSCHAFT) 30 April 2021 (2021-04-30) description, paragraphs 72-73 and 115 | 1, 2, 30-32, 38-42 |
| A | CN 108934188 A (HUAWEI TECHNOLOGIES CO., LTD.) 04 December 2018 (2018-12-04) entire document | 1-42 |
| A | CN 111385042 A (CHENGDU HUAWEI TECHNOLOGIES CO., LTD.) 07 July 2020 (2020-07-07) entire document | 1-42 |
| A | CN 113193935 A (BEIJING INFORMATION SCIENCE AND TECHNOLOGY UNIVERSITY) 30 July 2021 (2021-07-30) entire document | 1-42 |
| A | US 2019379422 A1 (COHERE TECHNOLOGIES, INC.) 12 December 2019 (2019-12-12) entire document | 1-42 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **23 February 2023** | **24 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/138316**

| Patent document cited in search report | | | Publication date (day/month/year) | Patent family member(s) | | | Publication date (day/month/year) |
|---|---|---|---|---|---|---|---|
| CN | 107370584 | A | 21 November 2017 | WO | 2017194010 | A1 | 16 November 2017 |
| CN | 112737745 | A | 30 April 2021 | KR | 20210044167 | A | 22 April 2021 |
| | | | | US | 2021111784 | A1 | 15 April 2021 |
| | | | | US | 11245463 | B2 | 08 February 2022 |
| | | | | EP | 3809656 | A1 | 21 April 2021 |
| CN | 108934188 | A | 04 December 2018 | JP | 2020516138 | A | 28 May 2020 |
| | | | | JP | 6899446 | B2 | 07 July 2021 |
| | | | | KR | 20190128220 | A | 15 November 2019 |
| | | | | KR | 102319178 | B1 | 28 October 2021 |
| | | | | CA | 3057541 | A1 | 27 September 2018 |
| | | | | AU | 2017405544 | A1 | 24 October 2019 |
| | | | | AU | 2017405544 | B2 | 10 June 2021 |
| | | | | EP | 3592024 | A1 | 08 January 2020 |
| | | | | EP | 3592024 | A4 | 27 May 2020 |
| | | | | RU | 2019133487 | A | 26 April 2021 |
| | | | | RU | 2019133487 | A3 | 09 June 2021 |
| | | | | US | 2021112503 | A1 | 15 April 2021 |
| | | | | US | 11284355 | B2 | 22 March 2022 |
| | | | | WO | 2018171006 | A1 | 27 September 2018 |
| CN | 111385042 | A | 07 July 2020 | WO | 2020134944 | A1 | 02 July 2020 |
| CN | 113193935 | A | 30 July 2021 | None | | | |
| US | 2019379422 | A1 | 12 December 2019 | US | 10666314 | B2 | 26 May 2020 |
| | | | | WO | 2017147439 | A1 | 31 August 2017 |
| | | | | EP | 3420641 | A1 | 02 January 2019 |
| | | | | EP | 3420641 | A4 | 11 December 2019 |

Form PCT/ISA/210 (patent family annex) (July 2022)

**EP 4 451 580 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111530595